(19) Europäisches Patentamt
European Patent Office
Office européen des brevets

(11) **EP 2 881 829 B1**

(12) **EUROPÄISCHE PATENTSCHRIFT**

(45) Veröffentlichungstag und Bekanntmachung des Hinweises auf die Patenterteilung:
**16.05.2018  Patentblatt 2018/20**

(51) Int Cl.:
*B62D 15/02* (2006.01)     *B60W 30/00* (2006.01)
*G05D 1/02* (2006.01)

(21) Anmeldenummer: **14196119.3**

(22) Anmeldetag: **03.12.2014**

(54) **Verfahren zum automatischen Steuern eines Fahrzeugs, Vorrichtung zum Erzeugen von Steuersignalen für ein Fahrzeug und Fahrzeug**

Method for automatically controlling a vehicle, device for generating control signals for a vehicle and vehicle

Procédé destiné à la commande automatique d'un véhicule, dispositif de production de signaux de commande pour un véhicule et véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2013  DE 102013225057**

(43) Veröffentlichungstag der Anmeldung:
**10.06.2015  Patentblatt 2015/24**

(73) Patentinhaber: **Fraunhofer-Gesellschaft zur Förderung der angewandten Forschung e.V.
80686 München (DE)**

(72) Erfinder:
• **Ziehn, Jens
  76185 Karlsruhe (DE)**
• **Rosenhahn, Bodo
  30952 Ronnenberg (DE)**
• **Willersinn, Dieter
  76139 Karlsruhe (DE)**
• **Ruf, Miriam
  76185 Karlsruhe (DE)**
• **Scheuermann, Björn
  30952 Ronnenberg (DE)**
• **Vais, Alexander
  30926 Seelze (DE)**

(74) Vertreter: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) Entgegenhaltungen:
JP-A- 2008 307 951     US-A1- 2008 097 699
US-A1- 2010 228 419     US-A1- 2012 143 488

• STERLING J. ANDERSON ET AL: "An optimal-control-based framework for trajectory planning, threat assessment, and semi-autonomous control of passenger vehicles in hazard avoidance scenarios", INTERNATIONAL JOURNAL OF VEHICLE AUTONOMOUS SYSTEMS, Bd. 8, Nr. 2/3/4, 1. Januar 2010 (2010-01-01), Seite 190, XP055219161, ISSN: 1471-0226, DOI: 10.1504/IJVAS.2010.035796

EP 2 881 829 B1

**Beschreibung**

Die vorliegende Erfindung bezieht sich auf das Gebiet der automatischen Steuerung von Fahrzeugen innerhalb einer Umgebung ausgehend von einer aktuellen Position in die Nähe einer Zielposition. Gemäß Ausführungsbeispielen schafft die vorliegende Erfindung ein Verfahren zum Steuern eines Fahrzeugs von einer aktuellen Position in die Nähe einer Zielposition, auch als "SPARC" (Situation Prediction and Reaction Control) bezeichnet, eine Vorrichtung zum Erzeugen von Steuerungssignalen zum Ansteuern von Aktuatoren eines Fahrzeugs zum Bewegen des Fahrzeugs von einer aktuellen Position in die Nähe einer Zielposition, und ein Fahrzeug umfassend eine solche Vorrichtung.

Gegenwärtige Assistenzsysteme und autonome Lösungen, wie sie beispielsweise im Zusammenhang mit Kraftfahrzeugen zum Einsatz kommen, arbeiten derart, dass Situationen in feste Kategorien klassifiziert werden, und je nach Kategorie wird ein bestimmtes Verhaltensmuster des Ego-Fahrzeugs ausgelöst. Hierbei werden unterschiedliche Teilsysteme des Fahrzeugs jeweils basierend auf vorgegebenen Teilstrategien kontrolliert, wie beispielsweise die Wahrung eines Sicherheitsabstands, das Halten der Fahrspur oder ein Ausweichmanöver für Hindernisse. Im Bereich der Kraftfahrzeuge gilt beispielsweise eine Kreuzung als befahrbar, wenn innerhalb eines Mindestabstand keine anderen Fahrzeuge erkannt werden.

Der Nachteil bekannter Ansätze besteht darin, dass eine Mehrzahl von unabhängigen Systemen innerhalb eines Fahrzeugs für unterschiedliche Situationen vorgesehen wird, wobei abhängig von der Situation ausgewählt werden muss, welches der mehreren unabhängigen Systeme die Führung des Fahrzeugs übernimmt. Der Nachteil dieser Vorgehensweise liegt auf der Hand, da es schwierig ist, die richtige Auswahl des in einer Situation zu aktivierenden Systems zu treffen, sodass bei mehreren, unabhängigen Systemen bzw. Modulen innerhalb des Fahrzeugs eine Situation auftreten kann, in der ein Modul ausgewählt wird, welches für die tatsächliche Situation nicht optimal ist, da durch das entsprechende Modul z.B. nur ein Teilbereich der Umgebung des Fahrzeugs berücksichtigt wird oder nur eine bestimmte Situation um das Fahrzeug herum erkannt wird. Ein weiterer Nachteil der Verwendung mehrerer, unabhängiger Systeme innerhalb eines Fahrzeugs besteht darin, dass abhängig von den Bedingungen in der Umgebung, in der sich das Fahrzeug bewegt, ein steter Wechsel der gerade aktivierten Systeme stattfindet, und dass bei jedem Wechsel ein neu aufgerufenes System zunächst die Umgebung im Rahmen seiner Fähigkeiten einschätzen muss, um abhängig hiervon aktiv zu werden. Dies führt dazu, dass beim Umschalten zwischen den Modulen wertvolle Informationen, die bereits durch das Vorgängermodul gesammelt wurden, verlorengehen können oder, sofern möglich, an das Nachfolgermodul in einem geeigneten Format übertragen werden müssen, wo sie dann zunächst verarbeitet werden müssen.

Somit bieten bekannte Assistenzsysteme, die eine Mehrzahl von unabhängigen Systemen aufweisen, keinen Ansatz, um die Gesamtsituation, in der sich das Fahrzeug befindet, vollumfänglich bzw. gesamtheitlich zu beschreiben, da durch die jeweils aktiven Module immer nur "Ausschnitte" der Gesamtsituation dargestellt werden können.

Ein weiteres Problem, das mit der Verwendung mehrerer unabhängiger Systeme im Fahrzeug einhergeht, besteht darin, dass viele unterschiedliche Module nötig sind, die jeweils aufeinander abgestimmt sein müssen, um den oben erwähnten Informationsverlust, soweit möglich, so gering wie möglich zu halten. Auch beim Austausch einzelner Module ergeben sich Probleme, da ein neues Modul an das Gesamtsystem angepasst werden muss, sodass der Austausch eines Moduls aufwendig und schwierig ist.

Beispiele für die oben erwähnten Assistenzsysteme werden in der DE 10 2012 009 297 A1, der DE 102 00 002 A1, der DE 10 2008 040 077 A1, der DE 103 34 203 A1, der DE 10 2004 048 530 A1, der DE 10 2011 081 159 A1, der DE 103 01 290 A1, der DE 10 2012 005 245 A1,der DE 11 2005 003 266 T5, der DE 10 2012 104 069 B3 oder der DE 101 128 792 A1 beschrieben. Diesen Ansätzen ist gemein, dass sie die Steuerung eine Fahrzeugs in einer Kollisionssituation betreffen, in der ausgehend von einer derzeitigen Position des Fahrzeugs eine Route gesucht wird, entlang der eine Kollision möglichst vermieden wird; es geht also nicht um eine automatische Steuerung des Fahrzeugs von einer Ausgangsposition zu einer beabsichtigten Zielposition.

Die JP 2008-307951 A beschreibt ein Fahrunterstützungssystem für Fahrzeuge mit einer Steuereinheit, die eine aktuelle Gesamtrisikofunktion jeweils für Markierungslinien, Absperrungen, Seitenbegrenzungen und dreidimensionale Objekte vorgibt, die um ein Fahrzeug herum vorhanden sind, eine zeitliche Veränderung bei der Position jedes Objektes abschätzt und ein Minimum der Gesamtrisikofunktion an der Fahrzeugposition für den jeweiligen Zeitpunkt berechnet. Eine Zielfunktion wird für den Zeitpunkt generiert, und ein Umfahrungssteuerbetrag, der die Zielfunktion zu dem Zeitpunkt minimiert, wird als Umfahrungssteuerbetrag des Fahrzeugs berechnet. Risikofunktionen, die bei Bewegung des Fahrzeugs um den Umfahrungssteuerbetrag bereitgestellt werden, werden für die jeweiligen Routen vorgegeben. Eine abschließende Ausweichroute wird aus den Risikofunktionen der Routen ausgewählt, und ein Lenkvorgang und ein Bremsvorgang werden entsprechend gesteuert.

Ausgehend von diesem Stand der Technik liegt der vorliegenden Erfindung die Aufgabe zugrunde, einen Ansatz zu schaffen, der es ermöglicht, ein Fahrzeug ausgehend von einer Anfangsposition zumindest in die Nähe einer Zielposition zu bewegen, basierend auf einer gesamtheitlichen Beurteilung der Gefahrensituation um das Fahrzeug herum.

Diese Aufgabe wird durch ein Verfahren gemäß Anspruch 1, eine Vorrichtung gemäß Anspruch 14 und ein Fahrzeug gemäß Anspruch 15 gelöst.

Somit betrifft die Erfindung ein Verfahren zum Steuern eines Fahrzeugs von einer aktuellen Position in die Nähe einer Zielposition, das das Bestimmen des Befahrungsrisikos einer Mehrzahl von Positionen in einer Umgebung des Fahrzeugs zu einem aktuellen Zeitpunkt und zu mehreren, dem aktuellen Zeitpunkt folgenden Zeitpunkten und das Bestimmen einer Trajektorie für das Fahrzeug, die die aktuelle Position und die Zielposition verbindet oder näherungsweise verbindet, unter Berücksichtigung von errechneten Befahrungsrisiken (etwa basierend auf Kollisionswahrscheinlichkeiten, Verkehrsregeln) sowie Fahrdynamik- und Komfortparametern, umfasst. Das Fahrzeugs wird dann entlang der modifizierten Trajektorie gesteuert.

Der erfindungsgemäße Ansatz ist vorteilhaft, da die im Stand der Technik als nachteilhaft erkannte ausschnittsweise Beurteilung der Umgebung des Fahrzeugs vermieden wird, vielmehr wird erfindungsgemäß die Umgebung des Fahrzeugs an einer Mehrzahl von Positionen im Hinblick auf das Befahrungsrisiko eben dieser Positionen beurteilt, wobei die Beurteilung eine Einschätzung des Befahrungsrisikos eines Ortes oder einer Position in der Umgebung des Fahrzeugs zu einem aktuellen Zeitpunkt und zu mehreren, dem aktuellen Zeitpunkt folgenden Zeitpunkten umfasst, so dass für die Bestimmung der Trajektorie bzw. des Weges von einer aktuellen Position zu der Zielposition eine gesamtheitliche Betrachtung der Umgebung des Fahrzeugs einbezogen wird, die insbesondere Veränderungen der Umgebung über die Zeit berücksichtigt. Basierend auf den so gewonnenen Informationen über das Befahrungsrisiko der Positionen um das Fahrzeug herum zum jetzigen Zeitpunkt und zu späteren Zeitpunkten kann ausgehend von einer anfänglichen Trajektorie für das Fahrzeug zunächst das Gesamtbefahrungsrisiko basierend auf den Positionen, die Teil dieser Trajektorie sind, bestimmt werden. Anschließend kann ein optimaler Weg durch die Umgebung von der aktuellen Position in die Nähe der Zielposition bestimmt werden, indem die anfängliche Trajektorie modifiziert wird, basierend auf Befahrungsrisiken an anderen Positionen, beispielsweise an Positionen, die einen vorbestimmten Abstand zur anfänglichen Trajektorie aufweisen, um so eine modifizierte Trajektorie zu erhalten, deren Gesamtbefahrungsrisiko gegenüber der anfänglichen Trajektorie reduziert ist. Basierend auf der so erzeugten, modifizierten Trajektorie werden dann Ansteuersignale für das Fahrzeug erzeugt, um dieses entlang eben dieser modifizierten Trajektorie zu bewegen.

Somit wird gemäß den Lehren der vorliegenden Erfindung das Prinzip der holistischen Szenenrepräsentation (HSR) ausgenutzt, was gegenüber herkömmlichen Ansätzen, die getrennte Teilsysteme verwenden, vorteilhaft ist. Indem gleichzeitig die Umgebungswahrnehmung als Risikoeinschätzung einfließt, und die Bewegungsparameter des Fahrzeugs optimiert werden, ist die erhaltene Lösung unter allen verfügbaren Kriterien diejenige mit dem geringsten Risiko. Im Gegensatz hierzu lehren gängige Lösungen zwar die Bestimmung einer fahrbaren Trajektorie basierend auf einer idealen Trajektorie, die aufgrund von Umgebungsinformationen ohne, oder nur mit groben Fahrbarkeitsbetrachtungen bestimmt wurde und anschließend zu einer tatsächlich fahrbaren Trajektorie geglättet/umgewandelt wurde, jedoch fehlt diesen Ansätzen nach der abschließenden Umwandlung der strenge Bezug zum ursprünglichen Optimalitätskriterium (etwa dem Befahrungsrisiko), sodass nicht garantiert ist, dass diese festgelegte glatte Trajektorie tatsächlich auch kollisionsfrei befahrbar ist.

Ein weiterer Vorteil der erfindungsgemäßen Vorgehensweise gegenüber gängigen Verfahren besteht darin, dass erfindungsgemäß durch die Bestimmung des Befahrungsrisikos an den verschiedenen Positionen in der Umgebung des Fahrzeugs zum aktuellen Zeitpunkt und zu mehreren nachfolgenden Zeitpunkten eine konkrete und statistisch belegte Vorhersage über die zukünftige Entwicklung der Umgebung oder der Szene möglich ist. Durch diese Voraussicht wird vermieden, dass das Ego-Fahrzeug in Situationen gelangt, in denen mittelfristig, z.B. innerhalb einiger Sekunden, ein Zusammenstoß unvermeidlich wird, oder Situationen, die durch das Ego-Fahrzeug nicht selbst aufgelöst werden können. Die erfindungsgemäße Planung der Trajektorie in die Zukunft, beispielsweise 5 s oder 10 s in die Zukunft, ermöglicht es, mehr Risiken abzuwägen, als dies bei herkömmlichen Ansätzen möglich ist, die lediglich auf einfachen Momentanentscheidungen basieren.

Ein weiterer Vorteil der erfindungsgemäßen Vorgehensweise besteht darin, dass aufgrund der Voraussicht auch sogenannte "gewagte" Manöver, die für einen menschlichen Fahrer in einfacher Form natürlich sind, auch in autonomen Lösungen erlaubt werden, ein Ansatz, der in herkömmlichen Systemen nicht bekannt ist. Als Beispiel sei das Überfahren einer befahrenen Kreuzung angenommen, was tatsächlich ein einfacher Prozess ist, wenn zeitlich aufgefächerte Vorhersagen bzw. Prädiktionen verwendet werden. Ist die Lücke zwischen zwei Fahrzeugen zeitlich lang genug, um eine sichere Durchfahrt zu erlauben, kann diese genutzt werden. Herkömmliche, autonome Systeme scheitern an einer solchen Situation in der Regel daran, fundiert die Breite einer zukünftigen Zeitlücke abzuschätzen. Gemäß herkömmlichen Ansätzen wird daher nicht einmal der Versuch unternommen, die Kreuzung zu überqueren, sondern es wird so lange gewartet, bis sicher kein Fahrzeug mehr in Sicht ist, das möglicherweise die Kreuzung zeitgleich durchquert, was zu einer erheblichen Zeitverzögerung bei der Bewegung des Fahrzeugs und damit zu einem deutlichen Zeitverlust einhergeht. Auch einige menschliche Fahrer haben Schwierigkeiten, Geschwindigkeiten, Distanzen und Zeiten abzuschätzen. Erfindungsgemäß werden die oben erwähnten Probleme dadurch gelöst, dass aufgrund von Sensordaten eine zuverlässige Erkennung der Gesamtsituation ermöglicht wird, und hierdurch auch eine zuverlässige Erkennung der Lücke, die dann, anders als bei herkömmlichen Verfahren, auch ein Befahren der Kreuzung zulässt, sofern aufgrund der Prädiktion festgestellt wird, dass die Lücke ausreichend groß ist.

Ein weiterer Vorteil des erfindungsgemäßen Ansatzes besteht darin, dass gemäß Ausführungsbeispielen durchgehend statistisch begründete Verfahren zum Einsatz kommen, welche es ermöglichen, eine Abweichung zwischen Modell und Realität einfach nachzuvollziehen, und zu prüfen, in welchen Fällen diese akzeptabel sind, und wo Probleme auftreten können. Gängige, autonome Lösungen verwenden oft Verfahren, die sich experimentell als funktionierend erwiesen haben, für die aber der Nachweis über die Annahmen und eventuelle Risikopunkte schwer zu führen ist, und unter Umständen keinem Beteiligten bewusst sind. Der erfindungsgemäße Ansatz ist vorteilhaft, da die Möglichkeit geschaffen wird, in jeder Situation Annahmen und Gegebenheiten direkt zu vergleichen, und die darüber definierten Optimalitätskriterien zu analysieren, so dass sich die Gelegenheit zu A-Priori-Aussagen über Sicherheitsmaße bietet, die in anderen Systemen lediglich empirisch getroffen werden können.

Gemäß Ausführungsbeispielen der vorliegenden Erfindung ergeben sich weitere Vorteile, die insbesondere harte Zustandsgrenzen im Fahrzeugverhalten und feste Kompetenzgrenzen vermeiden. Die erfindungsgemäße Vorgehensweise ermöglicht, dass das Fahrzeug ein Manöver durchführt, welches zumindest lokal basierend auf einer aktuellen Prädiktion für die Szene (Umgebung des Fahrzeugs) optimal ist. Das Manöver wird nicht explizit vorgegeben, vielmehr folgt das Fahrzeug mit jeder Aktion den vorgegebenen Prioritäten. Beispielsweise ist kein bewusster Eintritt in ein Pre-Crash-Verhaltensmuster nötig. Das Fahrzeug ergreift in jeder Situation die ihm bekannten Mittel, um Schäden, beispielsweise an Passagieren und anderen Verkehrsteilnehmern, zu minimieren, unabhängig davon, ob sich dies in der Wahrung des Sicherheitsabstands äußert, oder in einer bewussten Kollision mit der Leitplanke, um einen Fußgänger zu schützen.

Ausführungsbeispiele der Erfindung werden nachfolgend unter Bezugnahme auf die beiliegenden Zeichnungen näher erläutert. Es zeigen:

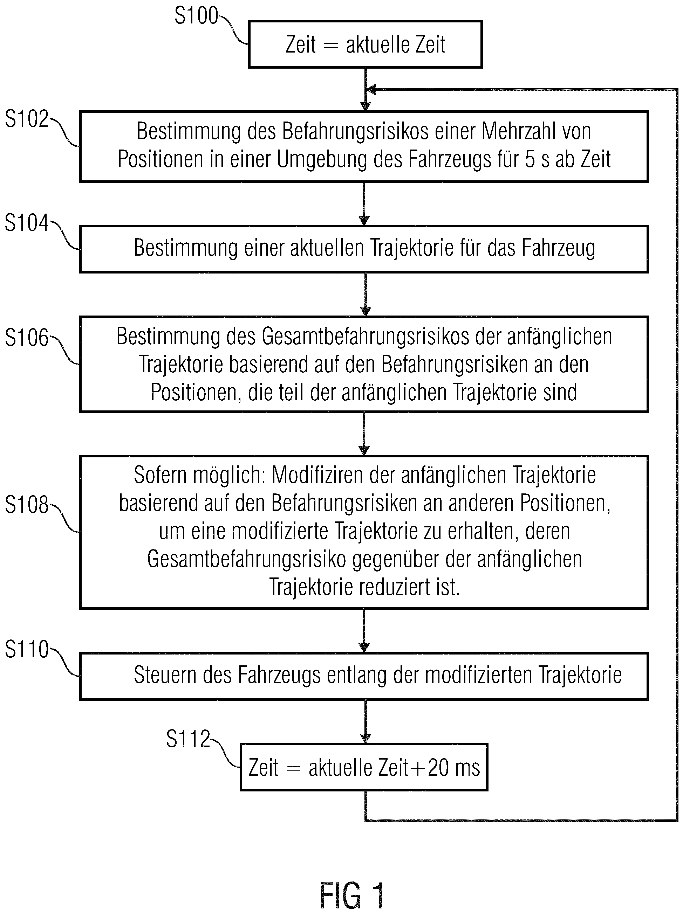

Fig. 1    ein Flussdiagramm, anhand dem ein Ausführungsbeispiel des erfindungsgemäßen Verfahrens zum Steuern eines Fahrzeugs von einer aktuellen Position in die Nähe einer Zielposition erläutert wird;

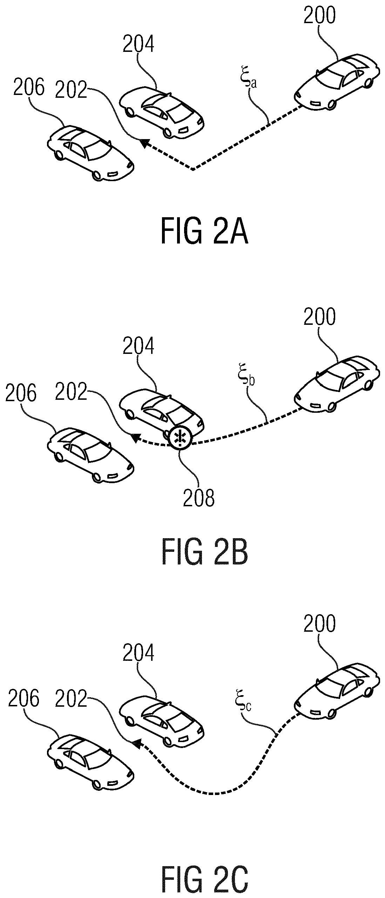

Fig. 2    verschiedene Trajektorien zum Bewegen eines Fahrzeugs von einer Ausgangsposition an eine Zielposition, wobei Fig. 2(a) eine ideale, aber nicht ausführbare Trajektorie zeigt, wobei Fig. 2(b) eine geglättete Trajektorie zeigt, und wobei Fig. 2(c) eine Trajektorie zeigt, die entsprechend den Lehren der vorliegenden Erfindung bestimmt wurde;

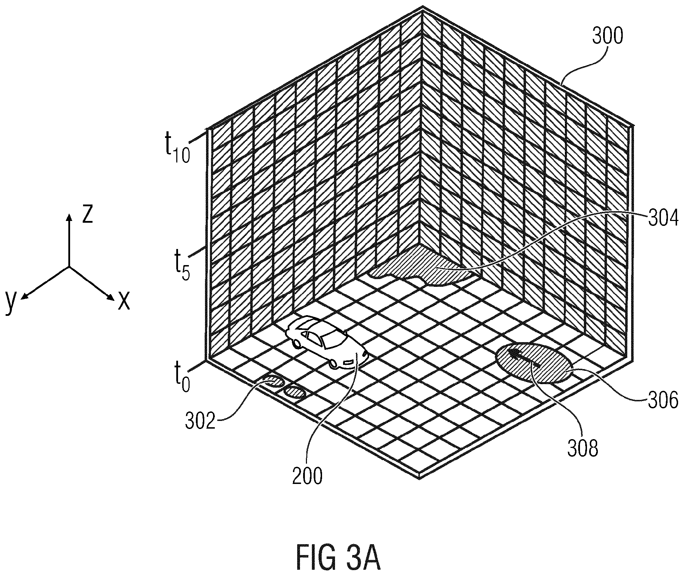

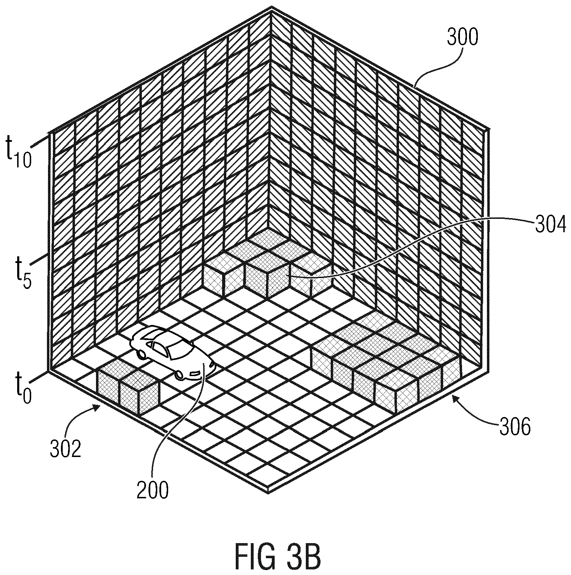

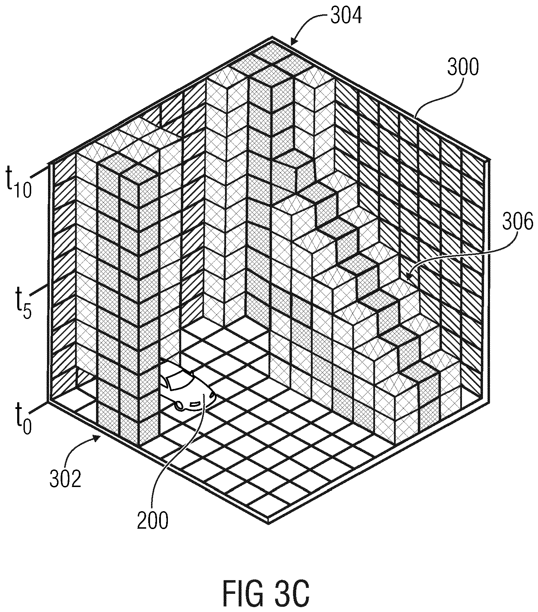

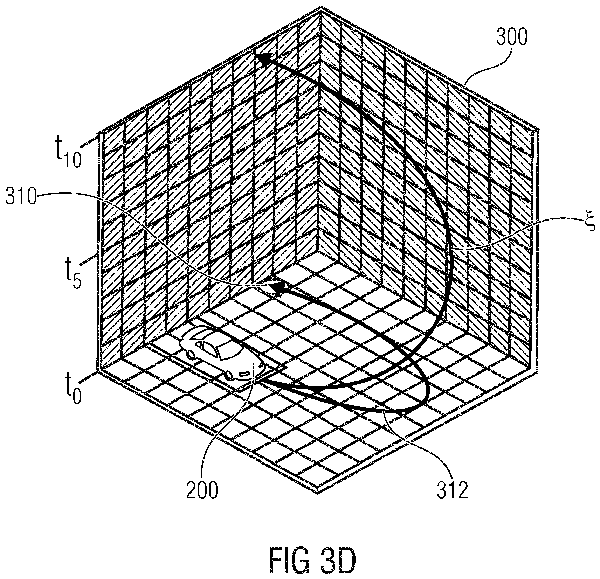

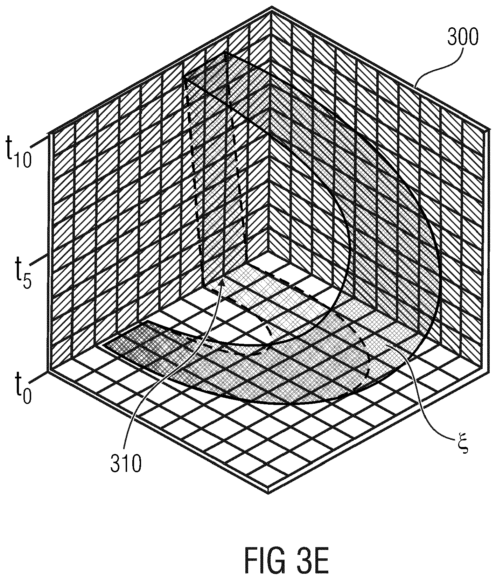

Fig. 3    den erfindungsgemäßen Ansatz des Einsatzes eines Energiekubus, wobei Fig. 3(a) die zu einem aktuellen Zeitpunkt erkannten Objekte dargestellt, wobei Fig. 3(b) die diskretisierten Kollisionsrisiken darstellt, wobei Fig. 3(c) die vorhergesagte Belegung der Funktionen in der Zukunft zeigt, wobei Fig. 3(d) eine mögliche Trajektorie zeigt, und wobei Fig. 3(e) das Raum-Zeit-Volumen anzeigt, welches durch einen Fahrzeugumriss belegt wird, wenn sich das Fahrzeug entlang der Trajektorie bewegt;

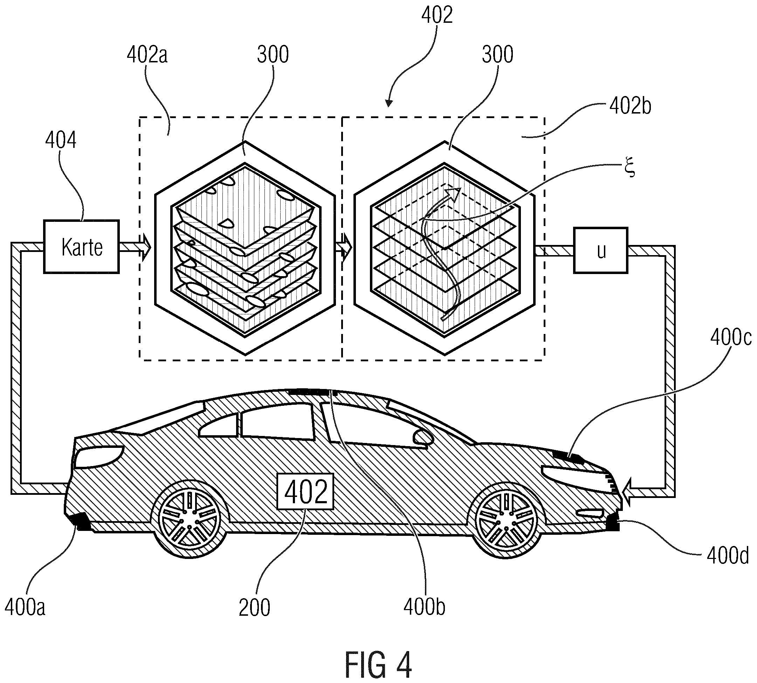

Fig. 4    das der Erfindung zugrunde liegende Konzept gemäß einem Ausführungsbeispiel innerhalb eines Kraftfahrzeugs;

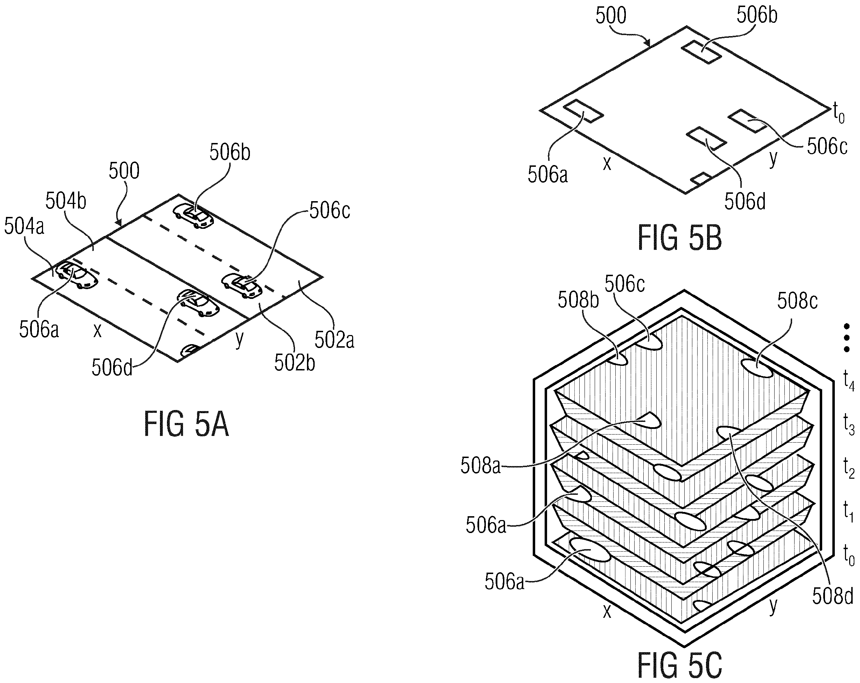

Fig. 5    eine holistische Darstellung einer Fahrzeugumgebung, wobei Fig. 5(a) die durch das Ego-Fahrzeug erfassten Objekte darstellt, wobei Fig. 5(b) die Besetzungswahrscheinlichkeit zu einem aktuellen Zeitpunkt darstellt, und wobei Fig. 5(c) die Vorhersage für die zukünftigen Besetzungswahrscheinlichkeiten zu späteren Zeitpunkten zeigt; und

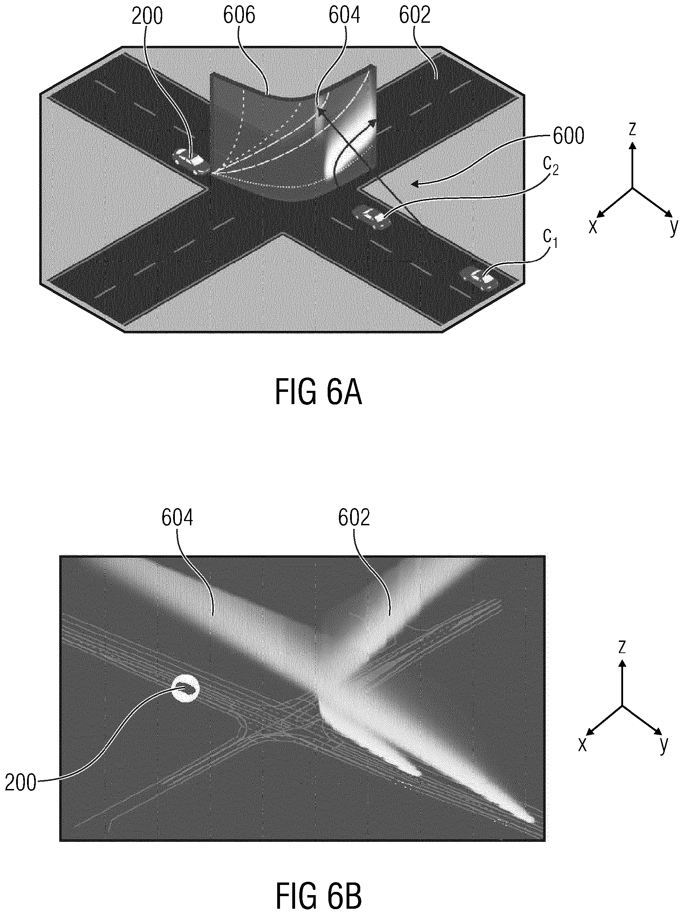

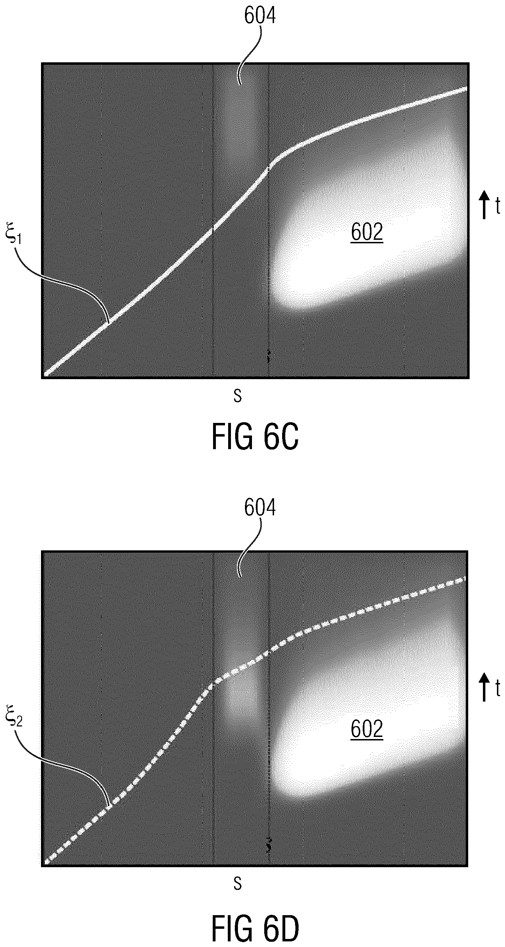

Fig. 6    ein Ausführungsbeispiel, bei dem der erfindungsgemäße Ansatz an einer Kreuzung zum Einsatz kommt, wobei Fig. 6(a) schematisch den Kreuzungsbereich zeigt, wobei Fig. 6(b) eine Darstellung des sich ergebenden Energiewürfels zeigt, und wobei Figs. 6(c) und 6(d) einen Ausschnitt des Energiewürfels aus Fig. 6(a) für einen großen bzw. geringen Abstand zwischen zwei Fahrzeugen zeigen.

Nachfolgend werden Ausführungsbeispiele der vorliegenden Erfindung näher erläutert. Die nachfolgende Beschreibung erfolgt anhand der beiliegenden Zeichnungen, in denen gleiche oder gleichwirkende Elemente mit den gleichen Bezugszeichen versehen sind. Ferner wird darauf hingewiesen, dass die nachfolgende Beschreibung der vorliegenden Erfindung anhand von Kraftfahrzeugen erfolgt, die innerhalb einer Umgebung von einer aktuellen Position zumindest in die Nähe einer Zielposition, und falls diese erreichbar ist, zu der Zielposition, bewegt werden sollen. Die vorliegende Erfindung ist jedoch nicht auf den Einsatz im Bereich von Kraftfahrzeugen beschränkt, vielmehr kann erfindungsgemäß jede Art von Fahrzeug in seiner Umgebung basierend auf dem erfindungsgemäßen Ansatz gesteuert werden, so dass der nachfolgend beschriebene Ansatz gleichermaßen für Bahnfahrzeuge, Luftfahrzeuge, Wasserfahrzeuge oder Raumfahrzeuge einsetzbar ist.

Fig. 1 zeigt ein Flussdiagramm, anhand dem ein Ausführungsbeispiel des erfindungsgemäßen Verfahrens zum Steuern eines Fahrzeugs von einer aktuellen Position in die Nähe einer Zielposition erläutert wird. In einem anfänglichen Schritt S100 wird die Zeit auf die aktuelle Zeit eingestellt, und im Schritt S102 wird für eine Mehrzahl von Positionen in einer Umgebung des Fahrzeugs ein Befahrungsrisiko bestimmt, und zwar ausgehend von der aktuellen Zeit in die Zukunft, beispielsweise für eine Zeitdauer von 5 s ab der aktuellen Zeit. Nachdem die Befahrungsrisiken für die Umgebung des Fahrzeugs zum aktuellen Zeitpunkt und für die Zukunft vorhergesagt wurden, erfolgt die Bestimmung einer Trajektorie für das Fahrzeug, die die aktuelle Position und die Zielposition verbindet. Zum Bestimmen dieser Trajektorie wird im Schritt S104 zunächst eine anfängliche Trajektorie für das Fahrzeug bestimmt, welche es ermöglicht, ausgehend von der aktuellen Position die Zielposition zu erreichen bzw. in die Nähe der Zielposition zu gelangen. Für diese anfängliche Trajektorie wird im Schritt S106 das Gesamtbefahrungsrisiko basierend auf den im Schritt S102 bestimmten Befahrungsrisiken für die Positionen, die Teil der betrachteten Trajektorie sind, bestimmt. Nachfolgend wird im Schritt S108 die anfängliche Trajektorie modifiziert, indem Befahrungsrisiken an anderen Positionen um die Trajektorie herum, die im Schritt S102 bestimmt wurden, berücksichtigt werden, um die anfängliche Trajektorie dahingehend zu modifizieren, dass die neue, modifizierte Trajektorie ein gegenüber der anfänglichen Trajektorie reduziertes Gesamtbefahrungsrisiko aufweist.

Gemäß Ausführungsbeispielen können im Schritt S108 beliebige Positionen, für die im Schritt S102 das Befahrungsrisiko bestimmt wurde, verwendet werden, wobei mögliche Positionen z.B. abhängig von der anfänglichen Trajektorie und der Umgebung ausgewählt werden können, beispielsweise Positionen, die innerhalb einer bestimmten Entfernung von der betrachteten Trajektorie liegen. Für diese Positionen wird dann beurteilt, inwieweit eine Modifizierung der Trajektorie derart, dass diese durch diese Positionen führt, zu einem reduzierten Gesamtbefahrungsrisiko führt.

Nachdem die Trajektorie für das Fahrzeug festgelegt wurde, erfolgt im Schritt S110 ein Steuern des Fahrzeugs entlang der modifizierten Trajektorie, beispielsweise durch Erzeugen entsprechender Ansteuerungssignale, die an Aktuatoren des Fahrzeugs, beispielsweise zum Beschleunigen, Abbremsen, Lenken und Ähnlichem weitergegeben werden. Dieser Vorgang wird, wie im Schritt S112 schematisch gezeigt, wiederholt, beispielsweise alle 20 ms. Ausgehend von dem neuen aktuellen Zeitpunkt erfolgt eine Abschätzung der Befahrungsrisiken für die Zukunft und entsprechend eine Modifizierung der Trajektorie, soweit erforderlich, und ein Ansteuern des Fahrzeugs entsprechend der endgültigen Trajektorie. Bei den Iterationen kann als anfängliche Trajektorie die in der vorhergehenden Iteration erhaltene modifizierte Trajektorie verwendet werde. Alternativ kann auch eine neue anfängliche Trajektorie verwendet werden, die ähnlich wie zu Beginn der Verfahrens bestimmt werden kann.

Gänzlich alternativ besteht die Möglichkeit, ohne Iteration schon innerhalb von nur einem Schritt alle möglichen Trajektorien, oder eine geeignete Auswahl, in Betracht zu ziehen, um eine optimale Endtrajektorie zu finden, oder die Trajektorie in Teilstücke zu zerlegen, die nacheinander gefunden werden. Abhängig vom gewählten Verfahren ist es nicht notwendigerweise erforderlich, sämtliche Befahrungsrisiken im Voraus zu berechnen, sondern gegebenenfalls nur bei Bedarf einzelne von ihnen zu berechnen, oder sogar verwandte Größen, wie beispielsweise räumliche und zeitliche Ableitungen, heranzuziehen.

Gemäß Ausführungsbeispielen wird somit ein Ansatz geschaffen, bei dem eine Abschätzung der Befahrungsrisiken für einen längeren Zeitrahmen ausgehend von einer aktuellen Zeit bestimmt wird, also ein Beurteilungsfenster in die Zukunft mit einer ersten Länge berücksichtigt wird, wohingegen dieses Fenster innerhalb kurzer Intervalle, z.B. alle 20 ms, fortbewegt wird, um so eine ausreichend feine Ansteuerung des Fahrzeugs zur Bewegung entlang einer jeweils entsprechend modifizierten Trajektorie zu ermöglichen.

Die in der Fig. 1 beschriebene Funktionalität sei nachfolgend anhand eines ersten Beispiels näher erläutert. Fig. 2 zeigt verschiedene Trajektorien zum Bewegen eines Fahrzeugs von einer Ausgangsposition an eine Zielposition, die zwischen zwei weiteren Fahrzeugen angeordnet ist, wobei Fig. 2(a) eine ideale, aber nicht fahrbare Trajektorie zeigt, wie sie in klassischen Verfahren bestimmt würde, Fig. 2(b) eine daraus berechnete geglättete Trajektorie zeigt, und wobei Fig. 2(c) eine gänzlich neu berechnete Trajektorie zeigt, die entsprechend den Lehren der vorliegenden Erfindung bestimmt wurde.

In Fig. 2(a) ist das Fahrzeug 200 dargestellt, das sogenannte Ego-Fahrzeug. In Fig. 2(a) ist die Position des Ego-Fahrzeugs 200 auch gleichzeitig die Ausgangsposition, und die Zielposition 202 befindet sich zwischen zwei weiteren Verkehrsteilnehmern 204 und 206. Bei dem dargestellten Ausführungsbeispiel handelt es sich bei den Verkehrsteilnehmern 204 und 206 um Fahrzeuge, die abgestellt sind. Das Ego-Fahrzeug 200 soll von der in Fig. 2(a) gezeigten Position an die Zielposition 202 bewegt werden. In Fig. 2(a) ist die ideale Trajektorie $\xi_{(a)}$ gezeigt, welche gemäß herkömmlichen Verfahren, die im Stand der Technik bekannt sind, bestimmt wurde. Fig. 2(b) zeigt die Trajektorie $\xi_{(b)}$, die durch Glättung der in Fig. 2(a) gezeigten idealen Trajektorie $\xi_{(a)}$ erhalten wird. Wie oben erwähnt, berücksichtigen gängige Verfahren, die ausgehend von einer idealen Trajektorie eine fahrbare Trajektorie durch Glätten der idealen Trajektorien definieren, keine Kollisionsrisiken. In Fig. 2(b) ist bei 208 ein Kollisionsrisiko angedeutet, nämlich dass das Ego-Fahrzeug 200 bei einer Bewegung entlang der geglätteten Trajektorie $\xi_{(b)}$ mit dem geparkten Fahrzeug 204 kollidieren wird.

Gegenüber den anhand der Figs. 2(a) und 2(b) gezeigten Situationen ist der erfindungsgemäße Ansatz vorteilhaft, da das Befahrungsrisiko der Umgebung des Fahrzeugs 200 miteinbezogen wird. Ferner kann auch die Fahrdynamik des Ego-Fahrzeugs 200 mit einbezogen werden, z.B. max. Lenkeinschlag, Wendekreis, Länge des Fahrzeugs, Brems- und Beschleunigungseigenschaften, etc. Fig. 2(c) zeigt die sich erfindungsgemäß ergebende Trajektorie $\xi_{(c)}$, entlang der das Ego-Fahrzeug 200 zu der Zielposition 202 gesteuert werden kann, ohne dass es zu Kollisionen mit den Fahrzeugen 204 bzw. 206 kommt. Das anhand der Fig. 2(c) dargestellte Beispiel arbeitet derart, dass beispielsweise im Schritt S102 (siehe Fig. 1) zunächst das Befahrungsrisiko einer Mehrzahl von Positionen um das Fahrzeug 200 bestimmt wird, wobei bei dem gezeigten Ausführungsbeispiel davon ausgegangen wird, dass nur die Bereiche, die durch die Fahrzeuge 204 und 206 eingenommen werden, ein Befahrungsrisiko von Eins (100%) aufgrund der möglichen Kollision aufweisen, alle verbleibenden Orte oder Positionen in Fig. 2 weisen ein Befahrungsrisiko von Null (0%) auf. Fig. 2(c) zeigt eine Situation, in der die Objekte in der Umgebung des Fahrzeugs 200 statisch angeordnet sind, so dass bei dem gezeigten Ausführungsbeispiel das Befahrungsrisiko der verschiedenen Positionen auch in der Zukunft gleich ist.

Die Auflösung, d.h. die Anzahl der Orte/Positionen, für die das Befahrungsrisiko bestimmt wird, wird z.B. abhängig von der Auflösung der zur Erfassung der Umgebungssituation verwendeten Sensoren am Fahrzeug 200 eingestellt, wobei die Einstellung dynamisch variiert werden kann, beispielsweise dann, wenn die Dichte von Objekten zunimmt, wird die Auflösung erhöht, d.h. mehr Positionen (Orte, die eine kleinere Fläche abdecken) um das Fahrzeug herum werden untersucht. Sind nur wenige Objekte vorhanden kann eine geringere Auflösung gewählt werden, z.B. werden Positionen bzw. Ort beurteilt, die eine größere Fläche abdecken.

Nachdem im Schritt S102 das Befahrungsrisiko für die verschiedenen Positionen in Fig. 2(c) festgelegt wurde, kann beispielsweise die im Stand der Technik bekannte geglättete Trajektorie $\xi_{(b)}$ als anfängliche Trajektorie zum Bewegen des Fahrzeugs angenommen werden, wie dies im Schritt S104 erfolgt. Für die geglättete Trajektorie $\xi_{(b)}$ wird dann das Gesamtbefahrungsrisiko entsprechend dem Schritt S106 bestimmt, wobei festgestellt wird, dass hier durch die Kollision im Bereich 208 ein erhöhtes Gesamtbefahrungsrisiko vorliegt (im Bereich 208 haben die betrachteten Positionen/Orte z.B. ein Befahrungsrisiko von 100%), so dass im Schritt S108 andere Positionen innerhalb des in Fig. 2(c) gezeigten Bereichs 210 betrachtet werden, um eine Modifizierung der geglätteten Trajektorie $\xi_{(b)}$ herbeizuführen, deren Befahrungsrisiko reduziert ist, wobei unter Berücksichtigung einer Reduzierung des Befahrungsrisikos im Schritt S108 die modifizierte Trajektorie $\xi_{(c)}$ bestimmt wird, entlang der das Fahrzeug gesteuert wird (Schritt S110 in Fig. 1).

Die oben erwähnte Vorgehensweise wird vorzugsweise zu vorbestimmten Intervallen, z.B. alle 20 ms, wiederholt, während zuvor bestimmte Trajektorien abgefahren werden. Unter der Annahme, dass die Positionen der Fahrzeuge 204 und 206 unverändert bleiben, werden die nächsten Iterationen des Verfahrens feststellen, dass das Befahrungsrisiko entlang der Trajektorie $\xi_{(c)}$ unverändert niedrig, so dass keine weitere Änderung erforderlich ist. Kommt es jedoch dazu, dass sich die Situation ändert, beispielsweise dass ein weiteres Fahrzeug (nicht dargestellt) in den Bereich 210 einfährt, dass sich der betrachtete Bereich (Umgebung des Fahrzeugs) aufgrund der Bewegung des Fahrzeugs so verschiebt, dass andere Objekte in dem Bereich auftauchen, oder dass eines der Fahrzeuge 204, 206 seine Position verändert, kann dies erfindungsgemäß bei der Bestimmung der Trajektorie $\xi_{(c)}$ zu späteren Zeitpunkten dadurch berücksichtigt werden, dass sich nunmehr das Befahrungsrisiko einiger der Positionen, die bisher ein hohes Risiko hatten, bzw. die bisher kein Risiko hatten, dahin gehend ändert, dass nun ein reduziertes Risiko oder ein erhöhtes Risiko vorliegt, so dass die bisher geltende modifizierte Trajektorie $\xi_{(c)}$ nicht mehr diejenige mit dem geringsten Befahrungsrisiko ist, also nicht mehr optimal ist. In diesem Fall wird durch Betrachtung der anderen Positionen im Bereich 210 der Fig. 2(c) eine weitere Modifizierung der Trajektorie durchgeführt, um deren Gesamtbefahrungsrisiko wieder zu reduzieren.

Somit wird gemäß Fig. 2(c) ein neuartiger Ansatz zum Bestimmen der Trajektorie zur Bewegung eines Fahrzeugs offenbart, welcher die Kollisionsrisiken minimiert, und gemäß bevorzugten Ausführungsbeispielen ferner ein dynamisches Modell für die Bewegung des Fahrzeugs 200 berücksichtigt. Demgegenüber ist der anhand der Figs. 2(a) und (b) beschriebene herkömmliche Ansatz nachteilhaft, da dieser zunächst eine theoretisch optimale Trajektorie $\xi_{(a)}$ findet, die dann geglättet wird. Die ursprüngliche, optimale Trajektorie $\xi_{(a)}$ hatte ein Befahrungsrisiko (ein Risiko von Kollisionen mit existierenden Objekten), welches bei null (0%) lag, wohingegen die geglättete Version nunmehr ein Befahrungsrisiko von eins (100%) aufweist. Dies liegt darin, dass bei der Glättung der Trajektorie keinerlei Überlegungen im Hinblick auf eine Kollisionsvermeidung einfließen, so dass die Glättung ein signifikantes Kollisionsrisiko einführt. Obwohl es grundsätzlich möglich ist, nach dem Glätten das Kollisionsrisiko erneut abzuschätzen, ist diese Vorgehensweise nachteilhaft, da es keinerlei Anhaltspunkte gibt, wo nach Verbesserungen zu suchen ist, und die naheliegende Lösung bestünde darin, die Glättung wieder in Richtung der optimalen Trajektorie aus Fig. 2(a) zu ändern, was aber wenig sinnvoll ist, da bereits bekannt ist, dass die in Fig. 2(a) gezeigte Trajektorie $\xi_{(a)}$ optimal, aber praktisch nicht fahrbar ist. Demgegenüber ist der erfindungsgemäße Ansatz vorteilhaft, da keine strikte Trennung zwischen der Art, wie Kollisionen vermieden werden können, und den Fahrzeugparametern, wie beispielsweise Geschwindigkeit und Beschleunigung, gemacht wird, so dass es möglich ist, einen Kompromiss zwischen Kollisionsrisiken und unerwünschten Systemzuständen zu erhalten und sich auf die Optimierungsprozesse zur Erlangung optimaler Lösungen zu verlassen.

Die oben anhand der Figs. 1 und 2 beschriebene Vorgehensweise zur Bestimmung des Befahrungsrisikos einer Mehrzahl von Positionen in einer Umgebung des Fahrzeugs nutzt das Prinzip der holistischen Szenenrepräsentation (HSR), welches wiederum effizient berechenbare Modelle nutzt, um das Verhalten aller erkannten Verkehrsteilnehmer zu prädizieren. Auf diese Weise wird ein mehrdimensionales Feld von Befahrungsrisiken generiert (im Weiteren der Anschaulichkeit halber auch "Energiekubus" oder "holistische Repräsentation" genannt), z.B.:

$$R(\boldsymbol{x}, \boldsymbol{v}, t) \tag{1}$$

wobei jeder Wert R den Erwartungswert des Schadens angibt, der beim Befahren der Position $\boldsymbol{x} = (x,y)$ zum Zeitpunkt $t$ mit der Geschwindigkeit $\boldsymbol{v} = (v_x, v_y)$ besteht. Wenn $\Omega(\boldsymbol{x}, \boldsymbol{v}, t)$ die Menge an schädlichen Ereignissen $\omega$ bezeichnet, die beim Befahren der Position x mit der Geschwindigkeit $\boldsymbol{v}$ zu einem Zeitpunkt $t$ eintreten können, so gilt:

$$R(\boldsymbol{x}, \boldsymbol{v}, t) = \sum_{\omega \in \Omega(\boldsymbol{x},\boldsymbol{v},t)} p(\omega) \cdot d(\omega) \tag{2}$$

wobei $p(\omega)$ die Wahrscheinlichkeit des Eintretens eines Ereignisses $\omega$ ist, und $d(\omega)$ eine vom Fahrzeughersteller spezifizierte "Kostenschätzung" des Schadens ist, und wobei "Schaden" auch beispielsweise Verkehrsregelverstöße beinhalten kann, die keine physische Beschädigung nach sich ziehen. Der Vorteil einer Nutzung von Erwartungswerten liegt in der Additivität dieser Werte unter der vereinfachenden Annahme stochastischer Unabhängigkeit aller Ereignisse $\omega$, was einen Kompromiss zwischen stochastisch sauberer Modellierung und effizienter Berechenbarkeit bietet. Die Aufenthaltswahrscheinlichkeiten für die Objekte in der Umgebung des Fahrzeugs werden erhalten, indem Geschwindigkeitsverteilungen als Diffusionsparameter für die Position eines Fahrzeugs verwendet werden. Die Geschwindigkeitsverteilungen können z.B. mit Hilfe der Kumaraswamy-Verteilung modelliert werden. Diese besitzt eine kumulative Verteilungsfunktion (CDF), die aus einem einfachen Polynom berechnet werden kann, dennoch aber eine hohe Flexibilität in der Form der Verteilung aufweist, und in einem abgeschlossenen Intervall definiert ist. Somit können unrealistisch hohe Geschwindigkeiten a-priori ausgeschlossen werden. Dies trägt zum Realismus des Modells bei, vereinfacht aber auch wesentlich die Berechnung, da viele Aufenthaltsorte von vorneherein ausgeschlossen werden können. Um das Verhalten der Fahrzeuge zu modellieren, kann auf Bayes-Netze zurückgegriffen werden, die das Verhalten von Fahrzeugen gegenüber ihrer Nachbarn modellieren. Auf diese Weise können beispielsweise Bremsmanöver von aufeinanderfolgenden Fahrzeugen vorhergesagt werden, sobald das vorderste Fahrzeug bremst. Gemäß Ausführungsbeispielen kann zur Vereinfachung angenommen werden, dass nur jeweils benachbarte Fahrzeuge einander beeinflussen, wodurch sich der Rechenaufwand reduziert. Allerdings ist hierdurch indirekt nahezu jedes Fahrzeug mit nahezu jedem anderen vernetzt, so dass die Ausdrucksfähigkeit des Modells immer noch hoch ist.

Die anhand der Gleichung (2) beschriebene Verteilung der Befahrungsrisiken kann genutzt werden, um optimale Trajektorien $\xi$ durch den $(x,y,t)$-Raum zu planen, die sowohl das Befahrungsrisiko $R[\xi]$ berücksichtigen, wie auch weitere oder sekundäre Trajektorieneigenschaften $G_{//}[\xi]$, wie beispielsweise starke Be- und Entschleunigungen, die Fahrdynamik und ähnliches. Wird keine explizite Abhängigkeit von der Geschwindigkeit $\boldsymbol{v}$ modelliert, so kann stattdessen $R(\boldsymbol{x},t)$ verwendet werden. Wenn ferner Risiken und sekundäre Trajektorien-Strafen additiv gewählt sind, ergibt sich die ideale Trajektorie formal eindeutig aus der so definierten Problemstellung, nämlich

$$\xi^* = \arg\min_{\xi}(R[\xi] + G_{//}[\xi]) \tag{3}$$

wobei der Gesamterwartungswert des Risikos entlang einer Trajektorie wie folgt definiert ist:

$$R[\xi] = \int dt\; R\left(\xi(t), t, \dot{\xi}(t)\right) \tag{4}$$

Gemäß den beschriebenen Ausführungsbeispielen wird die Additivität der Erwartungswerte ausgenutzt, unter der vereinfachten Annahme, dass alle atomaren Risiken $R(\boldsymbol{x},\boldsymbol{v},t)$ stochastisch unabhängig sind. Obwohl diese Annahme in der Praxis eher selten zutrifft, erlaubt die Anwendung von statistischen Annahmen klare Aufschlüsse darüber, in welchen Praxissituationen diesen Annahmen grob verletzt werden. Dabei korreliert die so erhaltene Lösung mit einer (praktisch unberechenbaren) exakten Lösung.

Gemäß Ausführungsbeispielen können unterschiedliche Möglichkeiten zur Feststellung der optimalen Trajektorie eingesetzt werden. Ein erster Ansatz besteht darin, die Gleichung (3) in einem bestätigten Modell direkt als Variationsproblem aufzufassen und dieses, unter harten Grenzbedingungen über die Freiheitsgrade des Ego-Fahrzeugs, mit Hilfe der Euler-Lagrange-Gleichung zu lösen. Ein weiterer Ansatz besteht darin, die zeitlichen Zustandsübergänge des Ego-Fahrzeugs, die $\xi$ ausmachen, in einem diskreten Modell als Hidden-Markov-Modell (HMM) anzusehen. In diesem Fall werden die Risiken $R(\boldsymbol{x},\boldsymbol{v},t)$ als Emissionen interpretiert, die auf die unbekannte Zustandsfolge $\xi(t)$ schließen lassen, wobei $G_{//}$ als Übergangswahrscheinlichkeiten zwischen Zuständen interpretiert werden. Mit Hilfe des Viterbi-Algorithmus kann die Trajektorie in diskreten Zeitschritten optimiert werden. Trotz der Diskretisierung fließen auch hier alle nötigen Informationen gleichzeitig ein, die später notwendige Glättung kann hier ebenfalls bereits modellintern berücksichtigt werden. Während der oben beschriebenen Variationsansatz effizient auf hochauflösenden Prädiktionsdaten arbeitet, ist der HMM-Ansatz vergleichsweise zeitaufwendig, dafür findet er, im Gegensatz zum Variationsansatz, nicht nur eine lokal stationäre, sondern auch eine global optimale Lösung. Gemäß Ausführungsbeispielen kann zunächst der Viterbi-Ansatz eingesetzt werden, um mit einer groben Diskretisierung das globale Optimum zu approximieren, wobei Details der Lösung dann durch den Variationsansatz bestimmt werden. Ein wiederum weiterer Ansatz besteht in der Verwendung von Konzepten aus dem Bereich der sogenannten modellprädiktiven Regelung (MPC), die die Ansteuerungsparameter des Fahrzeugs basierend auf einem gegebenen Dynamikmodell optimiert, und in diesem Prozess ebenfalls die berechneten Risiken berücksichtigt.

Basierend auf den oben beschriebenen Ansätzen zur Prädiktion einer Szene um ein Fahrzeug herum lässt sich beispielsweise im Zusammenhang mit Kraftfahrzeugen ein Ansatz realisieren, gemäß dem ein Kraftfahrzeug unter Berücksichtigung der Gesamtsituation in seiner Umgebung so gesteuert wird, dass es selbsttätig optimale Sicherheitsabstände einhält, sich anbahnende Auffahrunfälle vermeidet und die Geschwindigkeit beispielsweise an das Oberflächen- und/oder Kurvenverhalten der Straßen anpasst, um nicht nur sicher, sondern auch komfortabel zu fahren. Erfindungsgemäß wird die Möglichkeit geschaffen, all diese Ziele in einer einzigen Zielpriorisierung zu erfassen, ohne, wie im Stand der Technik üblich, auf dezidierte Verhaltensmuster für alle denkbaren Regel- und Sonderfälle eingehen zu müssen.

Fig. 3 zeigt den erfindungsgemäßen Ansatz des Einsatzes eines Energiekubus, wobei in Fig. 3(a) die zu einem aktuellen Zeitpunkt erkannten Objekte dargestellt sind, wobei Fig. 3(b) die diskretisierten Kollisionsrisiken darstellt, wobei Fig. 3(c) die vorhergesagte Belegung der Positionen für zukünftige Zeiten (vertikale Achse) zeigt, wobei Fig. 3(d) eine mögliche Trajektorie $\xi$ durch den Würfel zeigt, und wobei Fig. 3(e) das Raum-Zeit-Volumen anzeigt, welches durch einen Fahrzeugumriss belegt wird, wenn sich dieses entlang der Trajektorie $\xi$ bewegt.

In Fig. 3(a) ist mit dem Bezugszeichen 300 der Energiewürfel gezeigt, der bei dem dargestellten Ausführungsbeispiel zwei räumliche Dimensionen beinhaltet, d.h. die Position der Objekte in der x-y-Ebene anzeigt, wobei entlang der vertikalen Achse die Zeit t angezeigt ist. In Fig. 3(a) ist das Ego-Fahrzeug 200 dargestellt, welches in der x-y-Ebene an einer Position zu einem aktuellen Zeitpunkt $t_0$ angeordnet ist. Der Würfel 200 definiert die Umgebung um das Fahrzeug 300, welche für die Bestimmung der Trajektorie und für das Steuern des Fahrzeugs von der aktuellen Position (= Position des Ego-Fahrzeugs 200) zu einer Zielposition berücksichtigt wird. In der Umgebung des Ego-Fahrzeugs befinden sich mehrere Objekte, zum einen die stationären Objekte 302 und 304, beispielsweise Gebäude, Pflanzen oder Ähnliches, sowie ein mobiles Objekt 306, beispielsweise ein weiteres Fahrzeug, welches, wie durch den Pfeil 308 dargestellt ist, sich in Richtung des Ego-Fahrzeugs 200 bewegt, jedoch zum Zeitpunkt $t_0$ in einer Richtung parallel zur Position des Fahrzeugs 200. Die Objekte 302 bis 306 werden beispielsweise durch geeignete Sensoren, die am Fahrzeug angeordnet sein können, erfasst und diskretisiert, so dass zum Zeitpunkt $t = t_0$ (= aktueller Zeitpunkt) die Aufenthalts- bzw. Besetzungswahrscheinlichkeiten bestimmt werden können, was in Fig. 3(b) durch die unterschiedlich schraffierten Würfel an den Positionen 302 bis 306 angegeben ist, wobei höhere Energien, das heißt eine höhere Besetzungswahrscheinlichkeit, durch eine dichtere Schraffierung angedeutet sind. Die in Fig. 3(b) gezeigten Vorhersagen bzw. Wahrscheinlichkeiten der Besetzung der Orte schließen auch Unsicherheiten im Hinblick auf die Erfassung ein, was durch die unterschiedlich schraffierten Würfel in Fig. 3(b) dargestellt ist. Das Objekt 302 wird sicher erkannt, wie durch die gleichmäßig schraffierten Würfel angedeutet ist. Bei den Objekten 304 und 306 besteht eine Unsicherheit im Hinblick auf die Wahrscheinlichkeit der Besetzung aller Orte, was daraus resultiert, dass die Objekte nicht exakt in die entsprechenden Orte bzw. Positionen passen, so dass im Randbereich, beispielsweise beim Objekt 304 und 306 in den Bereichen, in denen die quadratischen Flächen nur teilweise belegt sind, eine reduzierte Energie bzw. reduzierte Wahrscheinlichkeit angedeutet ist, dass diese Orte vollständig besetzt sind.

Nachdem die Verteilung der Objekte und die Wahrscheinlichkeit der Besetzung der verschiedenen Orte um das Fahrzeug 200 herum zum jetzigen Zeitpunkt $t_0$ bestimmt wurde, wird erfindungsgemäß basierend auf den Eigenschaften der erfassten Objekte deren zukünftiges Verhalten abgeschätzt und vorhergesagt, und ebenfalls als Energiewerte im Kubus 300 angezeigt, wie dies in Fig. 3(c) dargestellt ist. Auch hier werden wiederum die Besetzungswahrscheinlichkeiten mit unterschiedlich stark schraffierten Würfeln angezeigt. Die Objekte 302 und 304 sind stationäre Objekte, die für sämtliche Zeiten vom jetzigen Zeitpunkt $t_0$ bis zum Zeitpunkt $t_{10}$ ohne Veränderung der x,y-Position mit der gleichen Wahrscheinlichkeit vorliegen. Das Objekt 306 ist ein sich bewegendes Objekt, z.B. ein anderes Fahrzeug, welches sich in Richtung des Pfeils 308 (siehe Fig. 3(a)) bewegt. Dementsprechend verändert sich die durch das Objekt 306 zu Zeitpunkten nachfolgend zum Zeitpunkt $t_0$ belegten Abschnitte des *x,y*-Raums, wodurch sich die stufenartige Verteilung der Besetzungswahrscheinlichkeiten in Fig. 3(c) ergibt.

Für die Bestimmung bzw. Vorhersage der Besetzungswahrscheinlichkeiten ausgehend vom jetzigen Zeitpunkt bis zu einem späteren Zeitpunkt nachfolgend zum jetzigen Zeitpunkt können die oben erwähnten Verfahren eingesetzt werden (Bayes-Netzwerk, Bestimmen einer Geschwindigkeitsverteilung gemäß der Kumaraswamy-Verteilung oder ähnliches). An dieser Stelle sei darauf hingewiesen, dass basierend auf dem oben vorgestellten Konzept, wie es anhand der Figs. 3(a) bis 3(c) beschrieben wurde, einem Fachmann verschiedene Ansätze bekannt sind, um die Besetzungswahrscheinlichkeit an verschiedenen Positionen oder Orten zu bestimmen.

Nachdem der Energiewürfel gemäß Fig. 3(c) erstellt wurde, wird in einem nächsten Prozessabschnitt eine erwünschte Trajektorie, vorzugsweise eine optimale Trajektorie zwischen der jetzigen Position des Ego-Fahrzeugs 200 und einer Zielposition bzw. einem beabsichtigten Ziel festgelegt. In Fig. 3(d) ist das Ego-Fahrzeug 200 dargestellt, wobei dies gleichzeitig die aktuelle Position angibt. Es sei angenommen, dass das Fahrzeug 200 wenden möchte, so dass die Zielposition 310 in der $x,y$-Ebene im Wesentlichen auf der gleichen $x$-Position liegt, jedoch in der $y$-Richtung versetzt ist. In Fig. 3(d) ist bei 312 der Fahrweg in der $x,y$-Ebene angezeigt, und $\xi$ stellt die Trajektorie des Fahrzeugs 200 durch den Energiekubus dar, das heißt die Trajektorie ausgehend vom Ausgangspunkt 200 zum Zielpunkt 310 über die Zeit. Aufgrund der Größe des Fahrzeugs 200 bleibt es jedoch nicht bei den in Fig. 3(d) gezeigten Linien, vielmehr muss der Umriss (Footprint) des Ego-Fahrzeugs 200 berücksichtigt werden. Daher nimmt die in Fig. 3(e) gezeigte Trajektorie $\xi$ ein bestimmtes Volumen innerhalb des Energiewürfels ein. Die in Fig. 3(e) gezeigte Trajektorie $\xi$ gibt diejenigen $x,y$-Bereiche an, die das Fahrzeug 200 während seiner Bewegung vom Ausgangspunkt zum Zielpunkt 310 befährt bzw. die durch dieses Fahrzeug während seiner Bewegung zumindest teilweise befahren werden. Die Energien bzw. Besetzungswahrscheinlichkeiten, die innerhalb des Volumens, welches durch die Trajektorie $\xi$ (Fig. 3(e)) bedeckt sind, definieren ihrerseits die Sicherheit bei einer Bewegung des Fahrzeugs 200 entlang der Trajektorie $\xi$. Die in Fig. 3(e) gezeigte Trajektorie $\xi$ stellt eine mögliche oder anfängliche Trajektorie zur Bewegung des Fahrzeugs 200 von dem Ausgangspunkt zum Zielpunkt 310 dar, so dass basierend auf dem erfindungsgemäßen Ansatz der Abbildung der Umgebung auf die oben beschriebene Art und Weise eine anfängliche Trajektorie zur weiteren Optimierung bereitgestellt werden kann.

Erfindungsgemäß erfolgt die Optimierung der Trajektorie $\xi$ in Fig. 3(e) derart, dass nach Bestimmung des Gesamtbefahrungsrisikos weitere Positionen innerhalb des Energiekubus berücksichtigt werden, durch die eine Trajektorie gelegt werden kann, und für den Fall, dass bestimmt wird, dass durch die Verlegung der Trajektorie das Befahrungsrisiko an dieser Stelle und damit das Gesamtbefahrungsrisiko reduziert werden kann, wird die anfängliche Trajektorie dementsprechend modifiziert und das Fahrzeug wird entlang der modifizierten Trajektorie bewegt.

Wie oben dargelegt, handelt es sich bei dem erfindungsgemäßen Ansatz, gemäß Ausführungsbeispielen, um ein iteratives Verfahren, welches eine Aktualisierung der Steuerparameter für das Fahrzeug zu vorbestimmten Intervallen durchführt, beispielsweise alle 20 ms, wobei auch kürzere oder längere Abstände möglich sind. Zu Beginn jedes Intervalls wird der anhand der Fig. 3(c) beschriebene Energiewürfel bestimmt, und zwar ausgehend von der derzeit aktuellen Position eine vorbestimmte Zeitdauer in die Zukunft, beispielsweise 5 s in die Zukunft. Abhängig von der zu Beginn jedes Intervalls festgestellten Verteilung der Befahrungsrisiken wird dann die Trajektorie modifiziert, falls erforderlich, und das Fahrzeug entsprechend gesteuert. Somit erfolgt die Vorhersage hinsichtlich der Besetzungswahrscheinlichkeiten (Befahrungsrisiken) über einen längeren Zeitraum, also weiter vorherschauend, als das Intervall, während dem die Steuerparameter bestimmt werden, so dass trotz der langen Vorschauzeit eine feine Einstellung der Fahrzeugparameter zum Steuern desselben sichergestellt ist.

Der erfindungsgemäße Ansatz wird nachfolgend anhand weiterer Ausführungsbeispiele weiter erläutert. Wie oben bereits erwähnt, schafft die vorliegende Erfindung gemäß Ausführungsbeispielen eine Alternative zu den stark modularisierten Ansätzen aus dem Stand der Technik, um ein automatisches Fahren von Fahrzeugen zu ermöglichen. Erfindungsgemäß wird gemäß Ausführungsbeispielen eine dynamische Karte (siehe Fig. 3) der Umgebung analysiert, in Echtzeit z.B. im Hinblick auf Behinderungen und Verkehrsregeln. Das Verhalten der dynamischen Objekte in der nahen Zukunft, z.B. in den folgenden 5 s, wird vorhergesagt, und diese Information wird verwendet, um eine dreidimensionale Risikokarte über den Raum und die Zeit zu erstellen. Eine optimale Trajektorie wird basierend auf den Befahrungsrisiken und, vorzugsweise aufgrund von weiteren internen Steuerungsparametern aufgefunden. Der erfindungsgemäße, holistische Ansatz ermöglicht es, alle relevanten Ziele sowie dynamische Beschränkungen bei der Planung der Trajektorie gleichzeitig zu berücksichtigen, ohne dass scharfe Zustandsübergänge während des Betriebs erforderlich wären.

Die nachfolgend beschriebenen Ausführungsbeispiele betreffen das Steuern eines autonomen Fahrzeugs, das oben erwähnte Ego-Fahrzeug, wobei die Steuerung unter Berücksichtigung folgender Aspekte erfolgt:

- Sicherheit (z.B. Kollisionsverhinderung oder Abschwächung, Einhaltung von Verkehrsregeln)
- Komfort (z.B. Verhindern unnötiger Beschleunigungen und Entschleunigungen)
- Ökonomie/Ökologie (z.B. Komfort in Verbindung mit der Verwendung der effizientesten Geschwindigkeit)

Das Fahrzeug umfasst modellabhängige Einrichtungen zum Manövrieren, z.B. entsprechende Aktuatoren, Einrichtungen zur Positionsbestimmung, z.B. ein GPS-System, und verschiedene Sensoren, z.B. einen Massenträgheitssensor, eine Stereokamera, einen Lasersensor, einen Radarsensor, einen Ultraschallsensor, und/oder einen Photonenmischsensor (PMD-Sensor). Ferner kann das Fahrzeug eine Kommunikationseinrichtung aufweisen, um eine Kommunikation mit anderen Fahrzeugen zu ermöglichen.

Als Umgebung seien Fahrbahnen, Straßen oder Parkplätze angenommen. Das gemäß der nachfolgenden Ausführungsbeispiele erläuterte Konzept basiert auf der Verarbeitung von Informationen, die von den oben genannten Sensoren, die an dem Fahrzeug befestigt sein können, stammen. Die anhand der Fig. 3(c) beschriebene dynamische Karte, der Energiewürfel, der die um das Ego-Fahrzeug erfassten Objekte enthält, zusammen mit den stochastischen Messwerten der Unsicherheit aller Beobachtungen wird auf die oben beschriebene Art erstellt (siehe Fig. 3).

Fig. 4 zeigt eine schematische Darstellung des erfindungsgemäßen Konzepts in einem Kraftfahrzeug 200, welches einen oder mehrere der oben erwähnten Sensoren aufweist, wobei in Fig. 4 schematisch vier Sensoren 400a bis 400d gezeigt sind, die an unterschiedlichen Positionen des Fahrzeugs 200 angeordnet sind. An dieser Stelle sei darauf hingewiesen, dass die Sensoren an anderen Positionen als denen, die in Fig. 4 gezeigt sind, angeordnet sein können, und dass auch mehr oder weniger Sensoren vorgesehen sein können. Das Fahrzeug 200 umfasst eine Vorrichtung, beispielsweise eine Signalverarbeitungsvorrichtung 402, die im oberen Bereich der Fig. 4 vergrößert dargestellt ist, und die dazu dient, die von der Sensorik 400 empfangene Information zu verarbeiten, und Steuersignale zum Ansteuern des Fahrzeugs zur Bewegung desselben entlang der erwünschten Trajektorie bereitzustellen. Basierend auf den durch die Sensoren 400a bis 400d erfassten Informationen, die an die Signalverarbeitungseinheit 402 gesendet werden, wird die Objektkarte 404 (siehe Fig. 3(a)) erzeugt, die die dynamischen und statischen Objekte zum jetzigen, also zum aktuellen Zeitpunkt, anzeigt. Diese Karte wird dem Situationsvorhersageblock 402a der Vorrichtung 402 bereitgestellt, welcher eine dynamische Analyse durchführt, beispielsweise im Hinblick auf eine Kollisionsverhinderung sowie eine statische Analyse, z.B. im Hinblick auf existierende Verkehrsregeln, wie beispielsweise Geschwindigkeitsbeschränkungen. Die sich ergebenden Befahrungsrisiken (siehe Fig. 3(c)) werden dem Reaktionssteuerungsblock 402b bereitgestellt, der eine Trajektorie und entsprechende Steuerparameter u erzeugt, die dem Fahrzeug 200 bereitgestellt werden, um z.B. entsprechende Aktuatoren des Fahrzeugs zum Steuern desselben anzusteuern, beispielsweise um das Fahrzeug entsprechend der ausgewählten Trajektorie zu lenken und/oder zu beschleunigen und/oder abzubremsen.

Gemäß Ausführungsbeispielen des erfindungsgemäßen Ansatzes wird in einem ersten Schritt unter Verwendung von Navigationsbefehlen und existierenden statischen Karten ein nächster Zielpunkt oder Wegpunkt für das Ego-Fahrzeug 200 festgelegt. Nachfolgend kann gemäß Ausführungsbeispielen vorgesehen sein, Informationen über statische Verkehrsregeln bereitzustellen, um den Orten um das Fahrzeug herum Sanktionen bei deren Verletzung zuzuordnen. Fig. 5 zeigt das Layout einer sich ergebenden holistischen Darstellung, wobei Fig. 5(a) die durch das Ego-Fahrzeug erfassten Objekte darstellt, wobei Fig. 5(b) die Besetzungswahrscheinlichkeit zum Zeitpunkt $t_0$ (= aktueller Zeitpunkt) darstellt, und wobei Fig. 5(c) die Vorhersage für die zukünftigen Besetzungswahrscheinlichkeiten zu späteren Zeitpunkten anzeigt. In Fig. 5(a) ist die Situation in der x,y-Ebene dargestellt, wobei Fig. 5(a) eine Situation entlang einer vierspurigen Straße 500 darstellt, wobei jeweils zwei Fahrspuren 502a, 502b bzw. 504a, 504b für eine Fahrtrichtung vorgesehen sind. In Fig. 5(a) ist angenommen, dass sich in der Umgebung des Ego-Fahrzeugs vier weitere Fahrzeuge 506a bis 506d befinden, wobei sich die Fahrzeuge 506a und 506d entlang der ersten Fahrtrichtung auf unterschiedlichen Fahrbahnen 504a, 504b bewegen, und die Fahrzeuge 506b und 506c bewegen sich ebenfalls auf unterschiedlichen Fahrbahnen 502a, 502b in der entgegengesetzten Fahrtrichtung. Fig. 5(b) zeigt die Besetzungswahrscheinlichkeiten zum aktuellen Zeitpunkt $t_0$ in der x,y-Ebene basierend auf den aktuellen Beobachtungen und Unsicherheiten, wobei die Bereiche mit weniger Schraffierung eine höhere Besetzungswahrscheinlichkeit anzeigen. Fig. 5(b) zeigt, dass den Orten/Positionen, an denen die Fahrzeuge 506a-506d angeordnet sind, eine maximale Besetzungswahrscheinlichkeit (z.B. 100%) zugeordnet ist. Bei dem gezeigten Beispiel sei angenommen, dass alle anderen Orte eine minimale Besetzungswahrscheinlichkeit (z.B. 0%) aufweisen. Fig. 5(c) zeigt für nachfolgende Zeiten $t_1$ bis $t_4$ die zum aktuellen Zeitpunkt $t_0$ getroffenen Vorhersagen für die Besetzungswahrscheinlichkeiten für die x,y-Ebene basierend auf den aktuellen Unsicherheiten und den zunehmenden Unsicherheiten bei der Vorhersage. Wie aus Fig. 5(c) zu erkennen ist, verändern sich die Besetzungswahrscheinlichkeiten an den Orten entsprechend der vorhergesagten Bewegung der Fahrzeuge 506a-506d. Tatsächlich ist zu erkennen, dass einige der Fahrzeuge aus der betrachteten Umgebung verschwunden sind, und dass andere Fahrzeuge 508a-d in dem Bereich 500 aufgetaucht sind, die nun auch in Betracht gezogen werden.

Gemäß dem oben beschriebenen Ausführungsbeispiel wird nachfolgend zur Festlegung des neuen Zielpunktes die derzeitige Besetzungswahrscheinlichkeit für die räumlichen Orte um das Fahrzeug herum bestimmt, also die Besetzungswahrscheinlichkeit zum Zeitpunkt $t = t_0$, und eben diesen Orten werden Befahrungsrisiken zugeordnet. Hierdurch ergibt sich die in Fig. 5(b) dargestellte Karte. Nachfolgend erfolgt die Vorhersage der Besetzungswahrscheinlichkeiten zu den späteren Zeitpunkten $t_1$ bis $t_{max}$, und wiederum eine Zuordnung der Befahrungsrisiken der Orte zu den späteren Zeitpunkten, wie dies anhand der Fig. 5(c) erläutert wurde. Anschließend wird erfindungsgemäß eine Trajektorie bestimmt, die die Wegpunkte, also den aktuellen Ort und den Zielort miteinander zumindest annäherungsweise verbindet, basierend auf harten Beschränkungen, wie beispielsweise der physikalischen Machbarkeit der Verbindung (z.B. Berücksichtigung von Hindernissen, z.B. Häuser oder dgl., zwischen dem aktuellen Ort und dem Zielort), und basierend auf weichen Beschränkungen. Die weichen Beschränkungen können z.B. gewählt sein, um verschiedene Risiken zu minimieren, z.B. das Risiko einer Kollision, das Risiko der Verletzung von Verkehrsregeln. Ferner können die weichen Beschränkungen die Dynamik des Fahrzeugs und eine zulässige Abweichung des Endpunkts von dem gesetzten Zielpunkt umfassen. Gemäß Ausführungsbeispielen werden alle der genannten Beschränkungen bei der Bestimmung der optimalen Trajektorie eingesetzt, wobei andere Ausführungsbeispiele auch nur einzelne oder mehrere dieser Beschränkungen berücksichtigen können. Gemäß Ausführungsbeispielen ist vorgesehen, dass das Befahrungsrisiko einer Position erhöht wird, wenn mit schwereren Kollisionen oder mit einer erhöhten Wahrscheinlichkeit von Kollisionen zu rechnen ist. Ebenso wird das Befahrungsrisiko erhöht, wenn mit einer erheblichen Verletzung der Verkehrsregeln zu rechnen ist. Ein erhöhtes Befahrungsrisiko wird ferner angegeben, wenn die Trajektorie zu einer nicht-ökologischen oder nicht-ökonomischen Fahrweise oder zu einem unkomfortablen Fahrgefühl führt. Dieser Vorgang führt zu einer modifizierten Trajektorie mit einem gegenüber der ursprünglichen Trajektorie reduzierten Befahrungsrisiko, wobei die Modifizierung solange durchgeführt werden kann, bis ein Befahrungsrisiko eine bestimmte Schwelle untereschreitet.

Basierend auf der so erzeugten modifizierten Trajektorie werden Steuerkommandos für das Fahrzeug errechnet, um eine Bewegung des Fahrzeugs bis zum Zeitpunkt $t_{max}$ entlang der modifizierten Trajektorie zu ermöglichen. Allerdings wird gemäß Ausführungsbeispielen die Trajektorie häufiger berechnet, z.B. alle 20 ms, und nur der aktuelle Satz von Steuerungsbefehlen wird an das Ego-Fahrzeug weitergeleitet. Folglich dient die Planung bis zum Zeitpunkt $t_{max}$ nicht dazu, den Zeitraum zwischen zwei Aktualisierungen der Fahrzeugsteuerparameter zu überbrücken, vielmehr wird durch den längeren Blick in die Zukunft gleichzeitig mit einer häufigen Aktualisierung der Fahrzeugparameter vermieden, dass unerwünschte Zustände in der weiteren Zukunft, die deutlich länger ist als das Aktualisierungsintervall für die Fahrzeugparameter, entstehen.

Der erfindungsgemäße Ansatz verwendet somit das oben beschriebene skalare Feld oder Vektorfeld über Zeit und Raum, um bekannte und vorhergesagte Informationen über die Umgebung des Fahrzeugs, die holistische Darstellung in Fig. 5(c) zu erhalten. Gemäß Ausführungsbeispielen kann die Trajektorie durch eine Anzahl numerischer Techniken angenähert werden, und die Berechnung der Befahrungsrisiken im Allgemeinen und des Energiewürfels im Besonderen stellen einen Kompromiss zwischen der Genauigkeit und der Berechnungszeit dar.

Fig. 6 zeigt ein Ausführungsbeispiel, gemäß dem der erfindungsgemäße Ansatz an einer Kreuzung zum Einsatz kommt, an der das Ego-Fahrzeug durch den entgegenkommenden Verkehr links abbiegen möchte. Fig. 6(a) zeigt schematisch den Kreuzungsbereich 600 sowie das Ego-Fahrzeug 200, welches an der Kreuzung 600 in Richtung der negativen x-Richtung (siehe das in Fig. 6(a) dargestellte Koordinatensystem) abbiegen möchte. Der Gegenverkehr umfasst die zwei Fahrzeuge $c_1$ und $c_2$, die entlang der negativen $y$-Richtung entgegen der Fahrtrichtung des Ego-Fahrzeugs 200 sich auf die Kreuzung 600 zu bewegen. Die Fahrzeuge $c_1$ und $c_2$ werden durch die dem Ego-Fahrzeug 200 zugeordneten Sensoren, die an dem Fahrzeug befestigt sein können, erfasst, ebenso kann deren Geschwindigkeit, Beschleunigung oder Ähnliches erfasst werden. Aus den erfassten Daten wird abgeleitet, dass sich das Fahrzeug $c_1$ ohne Abbiegen an der Kreuzung 600 weiter in der negativen $y$-Richtung bewegt, wohingegen beispielsweise aufgrund eines Abbremsens des Fahrzeugs und/oder aufgrund des Erkennens eines betätigten Blinkers des Fahrzeugs $c_2$ geschlossen wird, dass dieses in Richtung der negativen $x$-Achse an der Kreuzung 600 (nach rechts) abbiegen möchte, also in die gleiche Richtung, in die das Ego-Fahrzeug 200 abbiegen möchte. Es sei angenommen, dass das Fahrzeug 200 an der Kreuzung 600 steht und darauf wartet, abbiegen zu können. Die zwei Fahrzeuge $c_1$ und $c_2$ nähern sich der Kreuzung 600 auf der Gegenfahrbahn, so dass diese zwei Fahrzeuge gegenüber dem Ego-Fahrzeug Vorfahrt haben. Das Ego-Fahrzeug 200 kann entscheiden, vor den zwei Fahrzeugen abzubiegen oder zwischen den zwei Fahrzeugen, sofern ein ausreichender Abstand besteht. Der erfindungsgemäße Ansatz, wie er bisher beschrieben wurde, ermöglicht es, die Risiken für die zwei genannten Manöver abzuschätzen und eines der zwei Manöver durchzuführen, wenn das zugeordnete Risiko ausreichend niedrig ist.

Fig. 6(b) zeigt eine Darstellung des sich ergebenden Energiewürfels, genauer gesagt eine isometrische perspektivische Darstellung, wobei die hellen Bereiche die Besetzungswahrscheinlichkeiten der entsprechenden Orte in der $x,y$-Ebene über die Zeit darstellen. In Fig. 6(b) ist ferner das Ego-Fahrzeug 200 dargestellt sowie die Belegungswahrscheinlichkeiten 602 und 604 für die Fahrzeuge $c_1$ und $c_2$. Die Unsicherheit hinsichtlich der Position der Fahrzeuge $c_1$ und $c_2$ erhöht sich sichtbar entlang der Fahrbahnen, insbesondere aufgrund der Unsicherheiten hinsichtlich der zukünftigen Geschwindigkeit. Unter der Annahme, dass es nur eine zulässige Fahrbahn für beide Fahrzeuge gibt, nämlich die derzeitige Fahrbahn, ist die Sicherheit hinsichtlich der zukünftigen Position entlang der negativen $y$-Richtung hoch. Wie oben erwähnt wurde, wurde erfasst, dass das Fahrzeug $c_2$ den rechten Blinker gesetzt hat, so dass ein Rechtsabbiegen dieses Fahrzeugs vorhergesagt wird, wie aus dem Verlauf 602 entnehmbar ist. Hinsichtlich des Fahrzeugs $c_1$ wird vorhergesagt, dass dieses gerade über die Kreuzung 600 fährt, wie dies aus dem Bezugszeichen 604 ersichtlich ist. Begrenzt man den zu betrachtenden Bereich für die Bewegung des Fahrzeugs 200 auf den Bereich, in dem dieses Fahrzeug die Gegenfahrbahn kreuzt, so ist es lediglich erforderlich, die Optimierung im Hinblick auf die Breite s der Gegenfahrbahn durchzuführen. Das anfängliche dreidimensionale Planungsproblem ($x \times y \times t$) wandelt sich somit in ein zweidimensionales Planungsproblem ($s \times t$) und der sich ergebende Ausschnitt aus dem Energiewürfel ist in Fig. 6(a) mit dem Bezugszeichen 606 versehen. In Fig. 6(a) ist im Bereich 606 ferner eingezeichnet, wie die möglichen Trajektorien des Fahrzeugs 200 zum Abbiegen ausgestaltet sein können, sowie die erhöhten Besetzungswahrscheinlichkeiten 602 und 604 aus Fig. 6(b).

Figs. 6(c) und 6(d) zeigen den Ausschnitt des Energiewürfels 606 aus Fig. 6(a) für einen großen Abstand zwischen den Fahrzeugen $c_1$ und $c_2$ bzw. für einen geringen Abstand zwischen diesen zwei Fahrzeugen. Ist der Abstand zwischen den Fahrzeugen ausreichend breit (siehe Fig. 6(c)), wird die Trajektorie $\xi_1$ ausgewählt, und das Fahrzeug 200 entsprechend angesteuert, um zwischen den zwei Fahrzeugen $c_1$ und $c_2$ sich zu bewegen. Wie zu erkennen ist, erstreckt sich die Trajektorie $\xi_1$ im Bereich s ohne die Besetzungswahrscheinlichkeiten 602, 604, die die Anwesenheit eines der Fahrzeuge zu einem Zeitpunkt t anzeigen, zu kreuzen. Bei einem zu geringen Abstand, wie es anhand der Fig. 6(d) gezeigt ist, führt die so gewählte Trajektorie $\xi_2$ durch den Bereich 604 mit einer hohen Besetzungswahrscheinlichkeit durch das Fahrzeug $c_1$ und damit zu einem Kollisionsrisiko, sodass erfindungsgemäß entweder bestimmt wird, dass die Trajektorie im Fall von Fig. 6(d) modifiziert werden muss, sodass das Befahrungsrisiko im Bereich s reduziert wird, beispielsweise dadurch, dass das Fahrzeug angehalten wird, und abgewartet wird, bis beide Fahrzeuge die Kreuzung 600 passiert haben. Mit anderen Worten umfasst die oben anhand der Fig. 1 beschriebene Vorgehensweise des Modifizierens der anfänglichen Trajektorie auch die Feststellung, dass die optimale Trajektorie eine Stopp-Trajektorie ist, also dass keine Bewegung des Fahrzeugs durchgeführt werden soll und das Fahrzeug angehalten wird, bis in einem nachfolgenden Intervall bestimmt wird, dass eine Fortbewegungs-Trajektorie mit einem akzeptablen Befahrungsrisiko vorliegt. Alternativ zum Anhalten des Fahrzeugs kann die Modifizierung so ausfallen, dass z.B. bei einer ausreichend breiten Fahrbahn (ggf. auch unter teilweiser Ausnutzung einer anderen Fahrbahn) der Zielpunkt so verschoben wird, das eine Kollision vermieden wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Verfahren zum automatischen Steuern eines Fahrzeugs (200), mit folgenden Schritten:

    Bestimmen (S102) des Befahrungsrisikos einer Mehrzahl von Positionen in einer Umgebung des Fahrzeugs (200) zu einem aktuellen Zeitpunkt ($t_0$) und zu mehreren, dem aktuellen Zeitpunkt ($t_0$) folgenden Zeitpunkten ($t_1$-$t_{max}$);
    Bestimmen einer Trajektorie für das Fahrzeug (200) durch

    Bestimmung von Befahrungsstrafen oder abgeleiteter Größen, basierend auf Aufenthaltswahrscheinlichkeiten von anderen Objekten, für mehrere Ort- und Zeitkoordinaten, und
    Heranziehung der Befahrungsstrafen oder der abgeleiteten Größen, um eine Trajektorie zu finden, die eine möglichst geringe Gesamtstrafe akkumuliert; und

    automatisches Steuern des Fahrzeugs (200) entlang der bestimmten Trajektorie,
    **dadurch gekennzeichnet, dass**
    die zu bestimmende Trajektorie für das Fahrzeug (200) eine aktuelle Position des Fahrzeugs und eine erwünschte Zielposition (310) verbindet,
    die Befahrungsstrafen oder die abgeleiteten Größen ferner basierend auf unerwünschten Zuständen des Fahrzeugs (200) und Verkehrsregeln bestimmt werden.

2.  Verfahren gemäß Anspruch 1, bei dem das Bestimmen einer Trajektorie für das Fahrzeug (200), die die aktuelle Position und die Zielposition (310) verbindet oder näherungsweise verbindet, folgende Schritte umfasst:

    Bestimmen (S104) einer anfänglichen Trajektorie für das Fahrzeug (200),
    Bestimmen (S106) des Gesamtbefahrungsrisikos der anfänglichen Trajektorie basierend auf den Befahrungsrisiken an den Positionen, die Teil der anfänglichen Trajektorie sind, und
    Modifizieren (S108) der anfänglichen Trajektorie basierend auf den Befahrungsrisiken an anderen Positionen, um eine modifizierte Trajektorie zu erhalten, deren Gesamtbefahrungsrisiko gegenüber der anfänglichen Trajektorie reduziert ist.

3.  Verfahren gemäß Anspruch 1 oder 2, bei dem das Bestimmen des Befahrungsrisikos das Generieren eines mehrdimensionalen Feldes (300) von Befahrungsrisiken umfasst, wobei jedes Feld den Erwartungswert des Schadens angibt, der beim Befahren einer Position zu einem Zeitpunkt besteht.

4.  Verfahren gemäß einem der Ansprüche 1 bis 3, bei dem das Bestimmen des Befahrungsrisikos folgende Schritte umfasst:

    Erfassen von einem oder mehreren Objekten und der Positionen der Objekte in der Umgebung zu dem aktuellen Zeitpunkt ($t_0$);
    Vorhersagen der Positionen in der Umgebung, an denen sich die erfassten Objekte zu den folgenden Zeitpunkten ($t_1$ bis $t_{max}$) befinden;
    Bestimmen von schädlichen Ereignissen, die an den Positionen zu dem aktuellen Zeitpunkt ($t_0$) und zu den folgenden Zeitpunkten ($t_1$-$t_{max}$) eintreten können; und
    Bestimmen der Befahrungsrisiken für die Positionen zu dem aktuellen Zeitpunkt ($t_0$) und zu den folgenden Zeitpunkten ($t_1$-$t_{max}$) basierend auf einer Wahrscheinlichkeit des Eintretens des schädlichen Ereignisses an der entsprechenden Position zu dem aktuellen Zeitpunkt ($t_0$) und an den entsprechenden Positionen zu den fol-genden Zeitpunkten ($t_1$-$t_{max}$).

5.  Verfahren gemäß einem der Ansprüche 1 bis 4, bei dem die anfängliche Trajektorie ferner basierend auf weiteren Trajektorieneigenschaften modifiziert wird.

6.  Verfahren gemäß Anspruch 5, bei dem die weiteren Trajektorieneigenschaften Sicherheitsaspekte, Komfortaspekte, ökonomische und/oder ökologische Aspekte umfassen.

7. Verfahren nach Anspruch 6, bei dem die Sicherheitsaspekte die Vermeidung einer Kollision, die Schadensminderung bei einer Kollision oder die Verkehrsregeln umfassen, bei dem die Komfortaspekte die Vermeidung einer unnötigen Beschleunigung des Fahrzeugs (200) umfassen, und bei dem die ökonomischen oder ökologischen Aspekte die effizienteste Geschwindigkeit für das Fahrzeug (200) umfassen.

8. Verfahren gemäß einem der Ansprüche 1 bis 7, bei dem das Erfassen der Objekte das Erfassen von stationären Objekten und sich bewegenden Objekten in der Umgebung durch Sensoren (400a-400d) und/oder eine Kommunikation mit einem oder mehreren weiteren Fahrzeugen ($c_1$, $c_2$) in der Umgebung umfasst.

9. Verfahren nach einem der Ansprüche 1 bis 8, bei dem das Bestimmen (S102) des Befahrungsrisikos, das Bestimmen (S104-S108) der Trajektorie und das Steuern (S110) des Fahrzeugs mit einem Intervall wiederholt werden, dessen Länge kürzer ist als eine Zeitdauer, für die die Befahrungsrisiken bestimmt werden.

10. Verfahren nach einem der Ansprüche 1 bis 9, bei dem das automatische Steuern des Fahrzeugs (200) entlang der ausgewählten Trajektorie ein Lenken des Fahrzeugs (200) und/oder ein Beschleunigen des Fahrzeugs (200) und/oder ein Abbremsen des Fahrzeugs (200) und das Erzeugen von Steuerungssignalen (u) zum Ansteuern von Aktuatoren des Fahrzeugs (200) zum Bewegen des Fahrzeugs (200) entlang der modifizierten Trajektorie umfasst.

11. Verfahren nach einem der Ansprüche 1 bis 10, bei dem das Bestimmen der Befahrungsrisiken auf Aufenthaltswahrscheinlichkeiten von anderen Objekten, unerwünschten Zuständen des Fahrzeugs (200), Verkehrsregeln, Komfortaspekten und ökonomischen/ökologischen Aspekten basiert.

12. Computerprogramm zum Ausführen des Verfahren nach einem der Ansprüche 1 bis 11.

13. Vorrichtung zum Erzeugen von Steuerungssignalen zum Ansteuern von Aktuatoren eines Fahrzeugs (200) zum automatischen Steuern des Fahrzeugs (200), mit:

   einer Signalverarbeitungseinrichtung (402, 402a, 402b), die konfiguriert ist, um

   das Befahrungsrisiko einer Mehrzahl von Positionen in einer Umgebung des Fahrzeugs (200) zu einem aktuellen Zeitpunkt ($t_0$) und zu mehreren, dem aktuellen Zeitpunkt ($t_0$) folgenden Zeitpunkten ($t_1$-$t_{max}$) zu bestimmen,
   eine Trajektorie für das Fahrzeug (200) durch Bestimmung von Befahrungsstrafen oder abgeleiteter Größen, basierend auf Aufenthaltswahrscheinlichkeiten von anderen Objekten, für mehrere Ort- und Zeitkoordinaten, und Heranziehung der Befahrungsstrafen oder der abgeleiteten Größen, um eine Trajektorie zu finden, die eine möglichst geringe Gesamtstrafe akkumuliert, zu bestimmen, und

   die Steuerungssignale ($u$) zum automatisches Steuern des Fahrzeugs (200) entlang der bestimmten Trajektorie zu erzeugen,
   **dadurch gekennzeichnet, dass**
   die zu bestimmende Trajektorie für das Fahrzeug (200) eine aktuelle Position des Fahrzeugs und eine erwünschte Zielposition (310) verbindet,
   die Befahrungsstrafen oder die abgeleiteten Größen ferner basierend auf unerwünschten Zuständen des Fahrzeugs (200) und Verkehrsregeln bestimmt werden.

14. Vorrichtung gemäß Anspruch 13, bei der die Signalverarbeitungseinrichtung (402, 402a, 402b) konfiguriert ist, um eine Trajektorie für das Fahrzeug (200), die die aktuelle Position und die Zielposition (310) verbindet, durch Bestimmen einer anfänglichen Trajektorie für das Fahrzeug (200), Bestimmen des Gesamtbefahrungsrisikos der anfänglichen Trajektorie basierend auf den Befahrungsrisiken an den Positionen, die Teil der betrachteten Trajektorie sind, und Modifizieren der anfänglichen Trajektorie basierend auf den Befahrungsrisiken an anderen Positionen, um eine modifizierte Trajektorie zu erhalten, deren Gesamtbefahrungsrisiko gegenüber der anfänglichen Trajektorie reduziert ist, zu bestimmen.

15. Fahrzeug (200), mit
   einer Mehrzahl von Aktuatoren; und
   einer Vorrichtung gemäß Anspruch 13 oder 14 zum Erzeugen von Steuerungssignalen (u) zum Ansteuern der Aktuatoren des Fahrzeugs (200) zum Bewegen des Fahrzeugs (200) von einer aktuellen Position in die Nähe einer Zielposition (310).

**Claims**

1. Method for automatically controlling a vehicle (200), comprising:

   determining (S102) the driving risk of a plurality of positions in a surrounding area of the vehicle (200) at a current point in time ($t_0$) and at several points in time ($t_1$-$t_{max}$) following the current point in time ($t_0$);
   determining a trajectory for the vehicle (200) by

   determining driving penalties or derived values based on presence probabilities of other objects for several location coordinates and time coordinates, and
   using the driving penalties or the derived values in order to find a trajectory that accumulates a lowest possible overall penalty; and

   automatically controlling the vehicle (200) along the determined trajectory,
   **characterized in that**
   the trajectory to be determined for the vehicle (200) connects a current position of the vehicle and a desired target position (310),
   the driving penalties or the derived values are further determined based on undesired states of the vehicle (200) and on traffic rules.

2. Method according to claim 1, wherein determining a trajectory for the vehicle (200), which connects or approximately connects the current position and the target position (310), includes the following steps:

   determining (S104) an initial trajectory for the vehicle (200),
   determining (S106) the overall driving risk of the initial trajectory based on the driving risks at the positions that are part of the initial trajectory, and
   modifying (S108) the initial trajectory based on the driving risks at other positions in order to obtain a modified trajectory having a reduced overall driving risk with respect to the initial trajectory.

3. Method according to claim 1 or 2, wherein determining the driving risk includes generating a multidimensional field (300) of driving risks, wherein each field indicates the expected value of the damage that exists when driving at a position at a point in time.

4. Method according to any one of claims 1 to 3, wherein determining the driving risk includes the following steps:

   detecting one or several objects and the positions of the objects in the surrounding area at the current point in time ($t_0$);
   predicting the positions in the surrounding area, at which the detected objects are located at the following points in time ($t_1$ to $t_{max}$);
   determining harmful events that could occur at the positions at the current point in time ($t_0$) and at the following points in time ($t_1$-$t_{max}$); and
   determining the driving risks for the positions at the current point in time ($t_0$) and at the following points in time ($t_1$-$t_{max}$) based on a probability of the occurrence of the harmful event of the corresponding position at the current point in time ($t_0$) and at the corresponding positions at the following points in time ($t_1$-$t_{max}$).

5. Method according to any one of claims 1 to 4, wherein the initial trajectory is furthermore modified based on further trajectory characteristics.

6. Method according to claim 5, wherein the further trajectory characteristics include safety aspects, comfort aspects, economical and/or ecological aspects.

7. Method according to claim 6, wherein the safety aspects include the avoidance of a collision, the mitigation of damage in the event of a collision or the traffic rules, wherein the comfort aspects include the avoidance of unnecessary acceleration of the vehicle (200), and wherein the economical or ecological aspects include the most efficient speed for the vehicle (200).

8. Method according to any one of claims 1 to 7, wherein detecting the objects includes detecting stationary objects and moving objects in the surrounding area by means of sensors (400a-400d) and/or a communication with one or

several further vehicles ($c_1$, $c_2$) in the surrounding area.

9. Method according to any one of claims 1 to 8, wherein determining (S102) the driving risk, determining (S104-S108) the trajectory and controlling (S100) the vehicle are repeated in an interval having a length that is shorter than a duration for which the driving risks are determined.

10. Method according to any one of claims 1 to 9, wherein automatically controlling the vehicle (200) along the selected trajectory includes steering the vehicle (200) and/or accelerating the vehicle (200) and/or decelerating the vehicle (200) and generating control signals ($u$) in order to drive actuators of the vehicle (200) for moving the vehicle (200) along the modified trajectory.

11. Method according to any one of claims 1 to 10, wherein determining the driving risks is based on presence probabilities of other objects, undesired states of the vehicle (200), traffic rules, comfort aspects and economical/ecological aspects.

12. Computer program for executing the method according to any of one claims 1 to 11.

13. Device for generating control signals in order to drive actuators of a vehicle (200) for automatically controlling the vehicle (200), comprising:

a signal processor (402, 402a, 402b) configured to
determine the driving risk of a plurality of positions in a surrounding area of the vehicle (200) at a current point in time ($t_0$) and at several points in time ($t_1$-$t_{max}$) following the current point in time ($t_0$);
determine a trajectory for the vehicle (200) by determining driving penalties or derived values based on presence probabilities of other objects for several location coordinates and time coordinates and using the driving penalties and the derived values in order to find a trajectory that accumulates a lowest possible overall penalty, and generate the control signal ($u$) for automatically controlling the vehicle (200) along the determined trajectory, and **characterized in that**
the trajectory to be determined for the vehicle (200) connects a current position of the vehicle and a desired target position (310),
the driving penalties or the derived values are further determined based on undesired states of the vehicle (200) and on traffic rules.

14. Device according to claim 13, wherein the signal processor (402, 402a, 402b) is configured to determine a trajectory for the vehicle (200) that connects the current position and the target position (310) by determining an initial trajectory for the vehicle (200), determining the overall driving risk of the initial trajectory based on the driving risks at the positions that are part of the considered trajectory, and modifying the initial trajectory based on the driving risks at other positions in order to obtain a modified trajectory having a reduced overall driving risk with respect to the initial trajectory.

15. Vehicle (200), comprising
a plurality of actuators; and
a device according to claim 13 or 14 for generating control signals (u) in order to drive the actuators of the vehicle (200) for moving the vehicle (200) from a current position to the proximity of a target position (310).

**Revendications**

1. Procédé destiné à la commande automatique d'un véhicule (200), aux étapes suivantes consistant à:

déterminer (S102) le risque de conduite d'une pluralité de positions dans un environnement du véhicule (200) à un moment actuel ($t_0$) et à plusieurs moments ($t_1$ - $t_{max}$) suivant le moment actuel ($t_0$);
déterminer une trajectoire pour le véhicule (200)

en déterminant des pénalités de conduite ou des grandeurs dérivées, sur base des probabilités de présence d'autres objets, pour plusieurs coordonnées d'espace et de temps, et
en prenant en compte les pénalités de conduite ou les grandeurs dérivées pour trouver une trajectoire qui accumule une pénalité globale la plus petite possible; et

commander automatiquement le véhicule (200) le long de la trajectoire déterminée,
**caractérisé par le fait que**
la trajectoire à déterminer pour le véhicule (200) relie une position actuelle du véhicule et une position cible désirée (310),
les pénalités de conduite ou les grandeurs dérivées sont par ailleurs déterminées sur base d'états non désirés du véhicule (200) et de règles de circulation.

2. Procédé selon la revendication 1, dans lequel la détermination d'une trajectoire pour le véhicule (200) qui relie ou relie approximativement la position actuelle et la position cible (310) comporte les étapes suivantes consistant à:

déterminer (S104) une trajectoire initiale pour le véhicule (200),
déterminer (S106) le risque de conduite global de la trajectoire initiale sur base des risques de conduite aux positions qui font partie de la trajectoire initiale, et
modifier (S108) la trajectoire initiale sur base des risques de conduite à d'autres positions, pour obtenir une trajectoire modifiée dont le risque de conduite global est réduit par rapport à la trajectoire initiale.

3. Procédé selon la revendication 1 ou 2, dans lequel la détermination du risque de conduite comporte le fait de générer un champ multidimensionnel (300) de risques de conduite, chaque champ indiquant la valeur attendue des dommages qui existent lors de la conduite d'une position à un moment.

4. Procédé selon l'une des revendications 1 à 3, dans lequel la détermination du risque de conduite comporte les étapes suivantes consistant à:

détecter un ou plusieurs objets et les positions des objets dans l'environnement au moment actuel ($t_0$);
prédire les positions dans l'environnement auxquelles se trouvent les objets détectés aux moments suivants ($t_1$ à $t_{max}$);
déterminer les événements nuisibles qui peuvent se produire aux positions au moment actuel ($t_0$) et aux moments suivants ($t_1$ - $t_{max}$); et
déterminer les risques de conduite pour les positions au moment actuel ($t_0$) et aux moments suivants ($t_1$- $t_{max}$) sur base d'une probabilité de l'occurrence de l'événement nuisible à la position correspondante au moment actuel ($t_0$) et aux positions correspondantes aux moments suivants ($t_1$, - $t_{max}$).

5. Procédé selon l'une des revendications 1 à 4, dans lequel la trajectoire initiale est par ailleurs modifiée sur base d'autres propriétés de trajectoire.

6. Procédé selon la revendication 5, dans lequel les autres propriétés de trajectoire comportent les aspects de sécurité, les aspects de confort, les aspects économiques et/ou écologiques.

7. Procédé selon la revendication 6, dans lequel les aspects de sécurité comportent l'évitement d'une collision, la réduction des dommages lors d'une collision ou les règles de circulation, dans lequel les aspects de confort comportent l'évitement d'une accélération inutile du véhicule (200), et dans lequel les aspects économiques ou écologiques comportent la vitesse la plus efficace pour le véhicule (200).

8. Procédé selon l'une des revendications 1 à 7, dans lequel la détection des objets comporte la détection d'objets stationnaires et d'objets mobiles dans l'environnement par des capteurs (400a à 400d) et/ou une communication avec un ou plusieurs autres véhicules ($c_1$, $c_2$) dans l'environnement.

9. Procédé selon l'une des revendications 1 à 8, dans lequel la détermination (S102) du risque de conduite, la détermination (S104 à S108) de la trajectoire et la commande (S110) du véhicule sont répétées à un intervalle dont la longueur est inférieure au laps de temps pour lequel sont déterminés les risques de conduite.

10. Procédé selon l'une des revendications 1 à 9, dans lequel la commande automatique du véhicule (200) le long de la trajectoire choisie comporte le fait de diriger le véhicule (200) et/ou d'accélérer le véhicule (200) et/ou de ralentir le véhicule (200) et de générer des signaux de commande (u) pour activer les actionneurs du véhicule (200) pour déplacer le véhicule (200) le long de la trajectoire modifiée.

11. Procédé selon l'une des revendications 1 à 10, dans lequel la détermination des risques de conduite se base sur les probabilités de présence d'autres objets, d'états non désirés du véhicule, de règles de circulation, d'aspects de confort et d'aspects économiques / écologiques.

**12.** Programme d'ordinateur pour réaliser le procédé selon l'une des revendications 1 à 11.

**13.** Dispositif pour générer des signaux de commande pour activer les actionneurs d'un véhicule (200) pour la commande automatique du véhicule (200), avec:

un moyen de traitement de signal (402, 402a, 402b) qui est configuré pour

déterminer le risque de conduite d'une pluralité de positions dans un environnement du véhicule (200) à un moment actuel ($t_0$) et à plusieurs moments ($t_1$ - $t_{max}$) suivant le moment actuel ($t_0$),
déterminer une trajectoire pour le véhicule (200) en déterminant des pénalités de conduite ou des grandeurs dérivées sur base des probabilités de présence d'autres objets pour plusieurs coordonnées d'espace et de temps, et en prenant en compte les pénalités de conduite ou les grandeurs dérivées pour trouver une trajectoire qui accumule la pénalité globale la plus petite possible, et

générer les signaux de commande (*u*) pour la commande automatique du véhicule (200) le long de la trajectoire déterminée,
**caractérisé par le fait que**
la trajectoire à déterminer pour le véhicule (200) relie une position actuelle du véhicule et une position cible désirée (310),
les pénalités de conduite ou les grandeurs dérivées sont par ailleurs déterminées sur base d'états non désirés du véhicule (200) et des règles de circulation.

**14.** Dispositif selon la revendication 13, dans lequel le moyen de traitement de signal (402, 402a, 402b) est configuré pour déterminer une trajectoire pour le véhicule (200) qui relie la position actuelle et la position cible (310) en déterminant une trajectoire initiale pour le véhicule (200), en déterminant le risque de conduite global de la trajectoire initiale sur base des risques de conduite aux positions qui font partie de la trajectoire considérée et en modifiant la trajectoire initiale sur base des risques de conduite à d'autres positions, pour obtenir une trajectoire modifiée dont le risque de conduite global est réduit par rapport à la trajectoire initiale.

**15.** Véhicule (200), avec
une pluralité d'actionneurs; et
un dispositif selon la revendication 13 ou 14 destiné à générer des signaux de commande (u) pour activer les actionneurs du véhicule (200) pour déplacer le véhicule (200) d'une position actuelle vers la proximité d'une position cible (310).

S100 — Zeit = aktuelle Zeit

S102 — Bestimmung des Befahrungsrisikos einer Mehrzahl von Positionen in einer Umgebung des Fahrzeugs für 5 s ab Zeit

S104 — Bestimmung einer aktuellen Trajektorie für das Fahrzeug

S106 — Bestimmung des Gesamtbefahrungsrisikos der anfänglichen Trajektorie basierend auf den Befahrungsrisiken an den Positionen, die teil der anfänglichen Trajektorie sind

S108 — Sofern möglich: Modifiziren der anfänglichen Trajektorie basierend auf den Befahrungsrisiken an anderen Positionen, um eine modifizierte Trajektorie zu erhalten, deren Gesamtbefahrungsrisiko gegenüber der anfänglichen Trajektorie reduziert ist.

S110 — Steuern des Fahrzeugs entlang der modifizierten Trajektorie

S112 — Zeit = aktuelle Zeit + 20 ms

## FIG 1

FIG 2A

FIG 2B

FIG 2C

FIG 3A

FIG 3B

FIG 3C

FIG 3D

FIG 3E

FIG 4

FIG 5B

FIG 5C

FIG 5A

27

FIG 6A

FIG 6B

FIG 6C

FIG 6D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012009297 A1
- DE 10200002 A1
- DE 102008040077 A1
- DE 10334203 A1
- DE 102004048530 A1
- DE 102011081159 A1
- DE 10301290 A1
- DE 102012005245 A1
- DE 112005003266 T5
- DE 102012104069 B3
- DE 101128792 A1
- JP 2008307951 A